# EUROPEAN PATENT SPECIFICATION

(11) **EP 1 515 016 B1**
(45) Date of publication and mention of the grant of the patent: **10.12.2008**
(21) Application number: 04021625.1
(22) Date of filing: 10.09.2004
(51) Int. Cl.: F01N 3/20, F01N 3/035, F01N 3/025, F02D 41/02, F01N 9/00

(54) **Apparatus for controlling exhaust purifying catalyst of internal combustion engine**
Steuerungsvorrictung eines Abgasreinigungskatalysators für eine Brennkraftmaschine
Dispositif de commande d'un catalyseur pour la purification de gaz d'échappement pour un moteur à combustion interne

(30) Priority: 12.09.2003 JP 2003321877
(43) Date of publication of application: 16.03.2005
(73) Proprietor: Toyota Jidosha Kabushiki Kaisha, Toyota-shi, Aichi-ken, 471-8571 (JP); Denso Corporation, Kariya-shi, Aichi-ken, 448-8661 (JP)
(72) Inventor: Matsuoka, Hiroki, Toyota-shi, Aichi-ken, 471-8571 (JP); Inaba, Takayoshi, Kariya-shi, Aichi-ken, 448-8661 (JP)
(74) Representative: Kuhnen & Wacker

(56) References cited:
- EP-A- 1 258 620
- EP-A- 1 324 037
- EP-A- 1 335 118
- WO-A-01/49988
- DE-A1- 10 045 939
- DE-A1- 10 127 782
- PATENT ABSTRACTS OF JAPAN vol. 2000, no. 13, 5 February 2001 (2001-02-05) & JP 2000 274229 A (MITSUBISHI MOTORS CORP), 3 October 2000 (2000-10-03)

## Description

### BACKGROUND OF THE INVENTION

The present invention relates to an apparatus for controlling exhaust purifying catalyst of an internal combustion engine. Specifically, the present invention pertains to an apparatus that performs control for eliminating sulfur poisoning of an exhaust purifying catalyst located in the exhaust system of an internal combustion engine according to the amount of sulfur poisoning of the exhaust purifying catalyst.

Conventionally, apparatuses for controlling exhaust purifying catalyst in an in-cylinder fuel injection type gasoline engine are known. Such an apparatus executes control for eliminating sulfur poisoning of an exhaust purifying catalyst located in the exhaust system according to the amount of sulfur poisoning (for example, Japanese Laid-Open Patent Publication No. 2000-274229 (from page 4 to page 9, Fig. 1)).

When replenishing a vehicle having the exhaust purifying catalyst control apparatus, the filling station or the region where the filling station is located is identified by a car navigation system. Based on the information of the location, the sulfur concentration of the supplied gasoline is estimated. Then, according to the sulfur concentration of the supplied gasoline and the sulfur concentration of the gasoline that has existed in the tank before replenishing, the sulfur concentration of the gas to be combusted is computed. Based on the computed sulfur concentration, the sulfur poisoning amount of the exhaust purifying catalyst is computed. Sulfur poisoning elimination control is executed in accordance with the computed sulfur poisoning amount to prevent the exhaust emission from deteriorating and the fuel efficiency from being reduced.

However, although Japanese Laid-Open Patent Publication No. 2000-274229 discloses a case where the sulfur poisoning elimination control is executed for a gasoline engine, the publication does not disclose a case where the sulfur poisoning elimination control is executed for a diesel engine, which uses fuel different from gasoline. It is thus unknown whether the invention of the publication can be applied to diesel engines. Further, a car navigation system is necessary for computing the sulfur concentration of gasoline to be combusted. Also, computations for obtaining the sulfur concentration are complicated and apply a great load to the control apparatus.

The actual sulfur concentration of gasoline is not necessarily the same as the sulfur concentration obtained through the complicated computations. When gasoline having a different sulfur concentration from that of the gasoline in the tank is supplied, the sulfur concentration of gasoline in a fuel passage including fuel injection valves is changed gradually. The prior art control apparatus cannot execute the sulfur poisoning elimination control in a favorable manner in a transition where the sulfur concentration of gasoline is gradually changed. Particularly, when fuel having a low sulfur concentration is added to fuel having a high sulfur concentration, the sulfur concentration of gasoline to be combusted is immediately computed to be low although the sulfur concentration of fuel near the fuel injection valves is sufficiently high immediately after the supply of the fuel. The sulfur poisoning amount of the exhaust purifying catalyst is computed based on the sulfur concentration that has been computed to be low, and the sulfur poisoning elimination control is executed in accordance with the sulfur poisoning amount thus computed. If the sulfur poisoning elimination control is executed in accordance with the sulfur poisoning amount that is different from the actual sulfur poisoning amount, the exhaust emission can deteriorate and the fuel efficiency can be reduced.

Document EP 1 335 118 A2 discloses an apparatus and a method for treating exhaust gases from a diesel engine. There, removal of particulates from a filter in the exhaust system of an engine comprises determining the sulfur content of the engine's fuel and either (a) if the sulfur content is below a given level, passing nitric oxide (NO)-containing exhaust gas over a catalyst to convert NO to nitrogen dioxide (NO2) in an amount sufficient to burn off particulates at below 400 degrees C; or (b) if the sulfur content is above the given level, treating the fuel with an organic metal salt additive to reduce the ignition temperature of the particulates. Removal of particulates from a filter in the exhaust system of an internal combustion engine comprises determining the sulfur content of the engine's fuel and either: (a) if the sulfur content is below a given level, passing nitric oxide (NO)-containing exhaust gas over a catalyst upstream of the filter to convert NO to nitrogen dioxide (NO2) in an amount sufficient to burn off particulates from the filter at a temperature below 400 degrees C; or (b) if the sulfur content is above the given level, treating the fuel with an organic metal salt additive to reduce the ignition temperature of the particulates on the filter.

### SUMMARY OF THE INVENTION

Accordingly, it is an objective of the present invention to provide an apparatus for controlling an exhaust purifying catalyst of an internal combustion engine, such as a diesel engine, which apparatus is capable of executing control for eliminating sulfur poisoning of the exhaust purifying catalyst in a favorable manner.

To achieve the foregoing and other objectives and in accordance with the purpose of the present invention, an apparatus for controlling an exhaust purifying catalyst is provided. The catalyst is located in an exhaust system of a diesel engine. The apparatus executes elimination control for eliminating sulfur poisoning of the exhaust purifying catalyst in accordance with the amount of sulfur poisoning of the catalyst. The apparatus includes determination means and changing means. The determination means determines the level of sulfur concentration of fuel used in the diesel engine. The changing means changes a control procedure of the elimination control based on the sulfur concentration level determined by the determination means.

The present invention also provides another apparatus for controlling an exhaust purifying catalyst. The catalyst is located in an exhaust system of an internal combustion engine. The apparatus executes elimination control for eliminating sulfur poisoning of the exhaust purifying catalyst in accordance with the amount of sulfur poisoning of the catalyst. The apparatus includes indicating means that indicates the level of sulfur concentration of fuel used in the internal combustion engine.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a block diagram showing a vehicle diesel engine and a control apparatus according to a first embodiment;
Fig. 2 is a flowchart showing a switch judging routine according to the first embodiment;
Fig. 3 is a flowchart showing a sulfur poisoning amount computing routine according to the first embodiment;
Fig. 4 is a map used in the sulfur poisoning amount computing routine of Fig. 3 for computing a sulfur emitting amount Sᵣₜ per unit time;
Fig. 5(A) is a graph showing changes in a sulfur poisoning amount Sₓ when a switch is off according to the first embodiment;
Fig. 5(B) is a graph showing changes in the sulfur poisoning amount Sₓ when the switch is on according to the first embodiment;
Fig. 6 is a flowchart showing a filter regeneration routine according to a second embodiment;
Fig. 7 includes a graph showing changes in the particulate matter accumulation amount PMₛₘ according to the second embodiment when the switch is off, and a graph showing changes in the sulfur poisoning amount Sₓ when the switch is off according to the second embodiment;
Fig. 8 includes a graph showing changes in the particulate matter accumulation amount PMₛₘ when the switch is on according to the second embodiment, and a graph showing changes in the sulfur poisoning amount Sₓ when the switch is on according to the second embodiment;
Fig. 9 is a flowchart showing a filter regeneration routine according to a third embodiment;
Fig. 10 includes a graph showing changes in the particulate matter accumulation amount PMₛₘ when the switch is on according to the third embodiment, and a graph showing changes in the sulfur poisoning amount Sₓ when the switch is on according to the third embodiment;
Fig. 11 is a flowchart showing a switch judging routine according to a fourth embodiment;
Fig. 12(A) is a graph showing changes in the sulfur poisoning amount Sₓ according to the fourth embodiment;
Fig. 12(B) is a graph showing changes in the sulfur poisoning amount Sₓ according to a comparison example;
Fig. 13 is a flowchart showing a switch judging routine according to a fifth embodiment;
Fig. 14 is a flowchart showing a switch judging routine according to a sixth embodiment;
Fig. 15(A) is a graph showing changes in the sulfur poisoning amount Sₓ according to the sixth embodiment; and
Fig. 15(B) is a graph showing changes in the sulfur poisoning amount Sₓ according to a comparison example.

### DETAILED DESCRIPTION OF THE PREFERRED EMBODIMENTS

Hereinafter, a first embodiment of the present invention will be described with reference to the drawings.

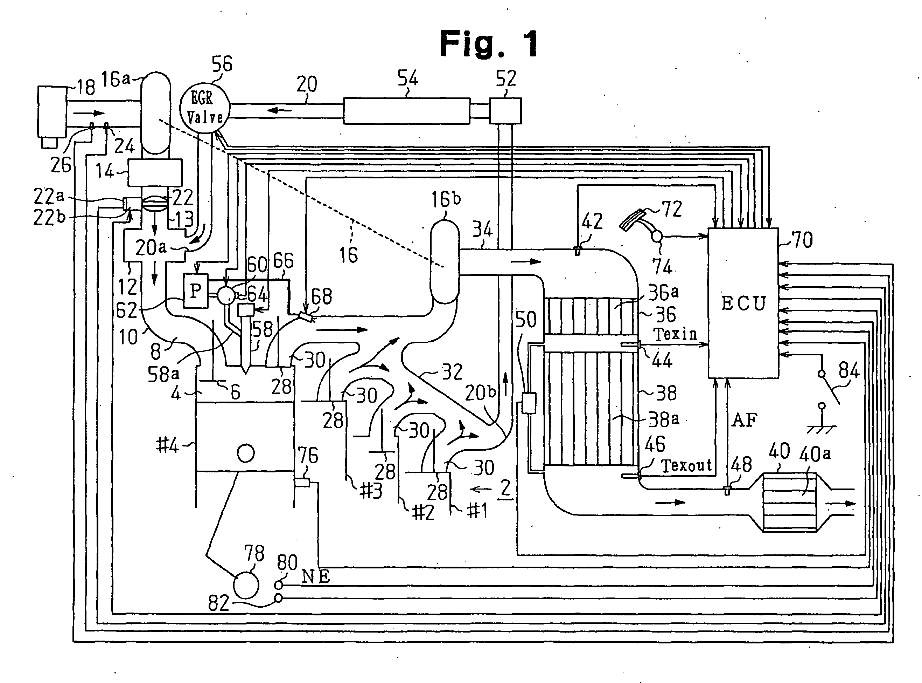

Fig. 1 is a block diagram illustrating a general configuration of a vehicle diesel engine and a control apparatus according to a first embodiment. As shown in Fig. 1, the diesel engine 2 has cylinders. In this'embodiment, the number of the cylinders is four, and the cylinders are denoted as #1, #2, #3, and #4. A combustion chamber 4 of each of the cylinders #1 to #4 includes an intake port 8. The combustion chambers 4 are connected to a surge tank 12 via the intake ports 8 and an intake manifold 10. Each intake port 8 is opened and closed by an intake valve 6. The surge tank 12 is connected to outlets of an intercooler 14 and supercharger through an intake passage 13. In this embodiment, a compressor 16a of an exhaust turbocharger 16 functions as a supercharger. An inlet of the compressor 16a is connected to an air cleaner 18. An exhaust gas recirculation (hereinafter, referred to as EGR) passage 20 is connected to the surge tank 12. Specifically, an EGR supply port 20a of the EGR passage 20 opens to the surge tank 12 so that the surge tank 12 communicates with the EGR passage 20. A throttle valve 22 is located in a section of the intake passage 13 between the surge tank 12 and the intercooler 14. An intake flow rate sensor 24 and an intake temperature sensor 26 are located between the compressor 16a and the air cleaner 18.

The combustion chamber 4 of each of the cylinders #1 to #4 includes an exhaust port 30. The combustion chambers 4 are connected to an inlet of an exhaust turbine 16b via the exhaust ports 30 and an exhaust manifold 32. Each exhaust port 30 is opened and closed by an exhaust valve 28. An outlet of the exhaust turbine 16b is connected to an exhaust passage 34. Exhaust gas is drawn into the exhaust turbine 16b at a section of the exhaust manifold 32 that is close to the fourth cylinder #4.

Three catalytic converters 36, 38, 40 are located in the exhaust passage 34. The first catalytic converter 36 supports a NOx occlusion-reduction catalyst 36a, which functions as an exhaust purifying catalyst. When exhaust gas is regarded as an oxidizing atmosphere (lean) during a normal operation of the diesel engine 2, the NOx occlusion-reduction catalyst 36a occludes nitrogen oxides (NOx) in exhaust. When the exhaust gas is regarded as a reducing atmosphere (stoichiometric air-fuel ratio or an air-fuel ratio lower than the stoichiometric air-fuel ratio), the NOx occlusion-reduction catalyst 36a emits occluded NOx in the form of nitrogen monoxide. The emitted nitrogen monoxide is reduced by hydrocarbon and carbon monoxide. In this manner, the first catalytic converter 36 removes NOx from exhaust gas, thereby purifying the exhaust gas.

The second catalytic converter 38, which is located downstream of the first catalytic converter 36, accommodates a filter 38a. The filter 38a has a monolithic wall. The wall has pores through which exhaust gas passes. The areas of the wall defining the pores are coated with a layer containing a NOx occlusion-reduction catalyst. That is, the NOx occlusion reduction catalyst is supported by the filter 38a. Therefore, when exhaust gas passes through the pores, NOx in the exhaust gas is removed as described above. Also, when exhaust gas passes through the pores, particulate matter in the exhaust gas is trapped by-the wall of the filter 38a. The trapped particulate matter starts being oxidized by active oxygen generated when NOx is occluded under a high temperature oxidizing atmosphere. The particulate matter is entirely oxidized by ambient excessive oxygen. In this manner, the second catalytic converter 38 removes NOx and particulate matter. In the first embodiment, the second catalytic converter 38 is integrated with the first catalytic converter 36. The filter 38a and the NOx occlusion-reduction catalyst supported the filter 38a function as exhaust purifying catalysts.

The third catalytic converter 40, which is located downstream of the first and second catalytic converters 36, 38, supports an oxidation catalyst 40a. The oxidation catalyst 40a oxides hydrocarbon and carbon monoxide in exhaust gas to purify the exhaust gas.

A first air-fuel ratio sensor 42 is located upstream of the NOx occlusion-reduction catalyst 36a. A first exhaust temperature sensor 44 is located between the NOx occlusion-reduction catalyst 36a and the filter 38a. A second exhaust temperature sensor 46 and a second air-fuel ratio sensor 48 are located between the filter 38a and the oxidation catalyst 40a. The second exhaust temperature sensor 46 is closer to the filter 38a, and the second air-fuel ratio sensor 48 is located closer to the oxidation catalyst 40a.

The first air-fuel ratio sensor 42 and the second air-fuel ratio sensor 48 each detect the air-fuel ratio of exhaust gas at the respective positions based on components of the exhaust gas. The first and second air-fuel ratio sensors 42, 48 each output electric signal in linear proportion to the detected air-fuel ratio. The first exhaust temperature sensor 44 detects an exhaust temperature Tₑₓᵢₙ at the corresponding position. Likewise, the second exhaust temperature sensor 46 detects an exhaust temperature Tₑₓₒᵤₜ at the corresponding position.

Pipes of a differential pressure sensor 50 are connected to a section upstream of the filter 38a and a section downstream of the filter 38a. The differential pressure sensor 50 detects the pressure difference between the sections upstream and downstream of the filter 38a, thereby detecting clogging in the filter 38a.

An EGR gas intake port 20b is provided in the exhaust manifold 32, which connects the exhaust manifold to the EGR passage 20. The EGR gas intake port 20b is located at a section of the exhaust manifold 32 that is close to the first cylinder #1, which section is opposite to a section of the exhaust manifold 32 at which the exhaust turbine 16b introduces exhaust gas.

An iron based EGR catalyst 52, an EGR cooler 54, and an EGR valve 56 are located in the EGR passage 20 in this order from the EGR gas intake port 20b to the EGR supply port 20a. The iron based EGR catalyst 52 functions to reform EGR gas and to prevent clogging of the EGR cooler 54. The EGR cooler 54 cools reformed EGR gas. By controlling the opening degree of the EGR valve 56, the flow rate of EGR gas supplied to the intake system through the EGR supply port 20a is adjusted.

A fuel injection valve 58 is provided at each of the cylinders #1 to #4 to directly inject fuel into the corresponding combustion chamber 4. The fuel injection valves 58 are connected to a common rail 60 with fuel supply pipes 58a. The common rail 60 is supplied with fuel by a variable displacement fuel pump 62, which is electrically controlled. High pressure fuel supplied from the fuel pump 62 to the common rail 60 is distributed to the fuel injection valves 58 through the fuel supply pipes 58a. A fuel pressure sensor 64 for detecting the pressure of fuel is attached to the common rail 60.

The fuel pump 62 supplies low-pressure fuel to a fuel adding valve 68 through a fuel supply pipe 66. The fuel adding valve 68 is provided in the exhaust port 30 of the fourth cylinder #4 and injects fuel to the exhaust turbine 16b. In this manner, fuel adding valve 68 adds fuel to exhaust gas. Addition of fuel to exhaust gas by the fuel adding valve 68 is performed in a catalyst control procedure, which is described below.

An electronic control unit (ECU) 70 is mainly composed of a digital computer having a CPU, a ROM, and a RAM, and drive circuits for driving other devices. The ECU 70 reads signals from the intake flow rate sensor 24, the intake temperature sensor 26, the first air-fuel ratio sensor 42, the first exhaust temperature sensor 44, the second exhaust temperature sensor 46, the second air-fuel ratio sensor 48, the differential pressure sensor 50, an EGR opening sensor in the EGR valve 56, the fuel pressure sensor 64, and the throttle opening degree sensor 22a. Further, the ECU 70 reads signals from an acceleration pedal sensor 74 that detects the depression degree of an acceleration pedal 72, a coolant temperature sensor 76 that detects the temperature of coolant of the diesel engine 2, an engine speed sensor 80 that detects the number of revolutions NE of a crankshaft 78, and a cylinder distinguishing sensor 82 that distinguishes cylinders by detecting the rotation phase of the crankshaft 78 or the rotation phase of the intake cams.

A high sulfur switch 84 is located on the dashboard. The switch 84 is manually switched between an on position and an off position, or between a first state and a second state, by an occupant such as a driver. When at a filling station in a region where high sulfur fuel is supplied, fuel of a high sulfur concentration is supplied to a fuel tank. In such a case, the switch 84 is manually put to on position. On the contrary, when fuel of low sulfur concentration is supplied to the fuel tank, the switch 84 is manually set to the off position. Depending on whether the switch 84 is at the on position or the off position, the ECU 70 changes the control procedures of sulfur poisoning elimination control and other processes, which will be described below.

Based on received signals, the ECU 70 obtains the operating condition of the engine 2. Based on the obtained engine condition, the ECU 70 controls the amount and the timing of fuel injection by the fuel injection valves 58. Further, the ECU 70 controls the opening degree of the EGR valve 56, the throttle opening degree with the motor 22b, and the displacement of the fuel pump 62. Also, the ECU 70 executes filter regeneration control and sulfur poisoning elimination control, which will be described below. For example, the ECU 70 executes an EGR control process such that an actual EGR ratio seeks a target EGR ratio, which is set based on the engine load and the number of revolutions NE of the engine 2. In the EGR control process, the ECU 70 controls a throttle opening degree and the EGR opening degree (the opening degree of the EGR valve 56) in coordination. Alternatively, the ECU 70 performs feedback control of intake flow rate such that an actual intake flow rate seeks a target intake flow rate (target value per rotation of the engine 2), which is set based on the engine load and the number of revolutions NE of the engine 2. In the intake flow rate feedback control, the ECU 70 controls the EGR opening degree. The ECU 70 may obtain the fuel injection amount based on the engine load or the depression degree of the acceleration pedal 72.

According to the operating condition, the ECU 70 executes either of a normal combustion mode and a low temperature combustion mode. In the low temperature combustion mode, a large amount of exhaust gas is recirculated so that the combustion temperature is slowly increased. This simultaneously reduces NOx and smoke. In this embodiment, the low temperature combustion mode is executed in a low load, middle-to-high rotation speed region. In the normal combustion mode, normal EGR control (including a case where no exhaust gas is recirculated) is performed.

The ECU 70 also executes four catalyst control procedures, which include a filter regeneration mode, a sulfur poisoning elimination mode, a NOx reduction mode, and a normal mode.

In the filter regeneration mode, particulate matter deposited on the filter 38a of the second catalytic converter 38 is heated, so that the particulate matter is combusted and split into carbon dioxide and water. In this mode, a temperature increase process is executed, in which addition of fuel from the fuel adding valve 68 is repeated in an air-fuel ratio higher than the stoichiometric air-fuel ratio so that the catalyst bed temperature is increased to a high temperature which is, for example, in a range from 600°C to 700°C. In the filter regeneration mode, an after injection may be performed by the fuel injection valve 58.

In the sulfur poisoning elimination mode, sulfur components are emitted from the NOx occlusion-reduction catalysts of the first and second catalytic converters 36, 38 so that the NOx occlusion capacity of the converters 36, 38, which has been lowered due to poisoning of sulfur, is restored. In this mode, a temperature increase process is executed, in which addition of fuel from the fuel adding valve 68 is repeated so that the catalyst bed temperature is increased to a high temperature which is, for example, in a range from 600°C to 700°C. Also, an air-fuel ratio lowering process is executed in which the air-fuel ratio is changed to the stoichiometric air-fuel ratio or a value slightly lower than the stoichiometric air-fuel ratio. In the sulfur poisoning elimination mode, an after injection may be performed by the fuel injection valve 58.

In the NOx reduction mode, NOx occluded by the NOx occlusion-reduction catalysts of the first and second catalytic converters 36, 38 is reduced to nitrogen. As a byproduct, carbon dioxide and water are formed when NOx is reduced to nitrogen. In the NOx reduction mode, a process is executed, in which addition of fuel from the fuel adding valve 68 is repeated at a relatively long interval so that the catalyst bed temperature is increased to a not so high temperature which is, for example, in a range from 250°C to 500°C. Also, another process is executed, in which the air-fuel ratio is changed to the stoichiometric air-fuel ratio or a value lower than the stoichiometric air-fuel ratio.

In the normal mode, addition of fuel from the fuel adding valve 68 and after injection by the fuel injection valves 58 are not performed.

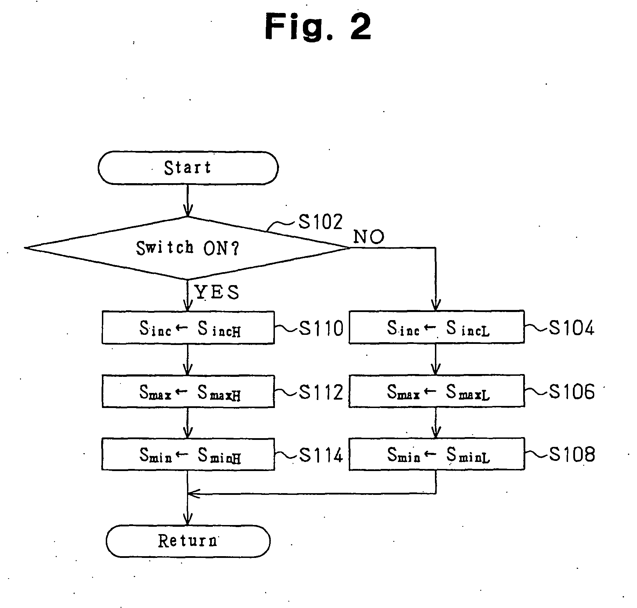

Fig. 2 is a flowchart showing a switch judging routine executed by the ECU 70. In this routine, whether the switch 84 is on is judged. In response to the result, the control procedure of the sulfur poisoning elimination control, which is executed for the NOx occlusion-reduction catalysts of the first and second catalytic converters 36, 38 is switched. The switch judging routine is repeatedly executed by the ECU 70 at a predetermined interval. That is, the switch judging routine is a periodical interruption process routine.

When the switch judging routine is started, the ECU 70 judges whether the switch 84 is on at step S102. When judging that the switch 84 is not on, the ECU 70 proceeds to step S104. At step S104, the ECU 70 substitutes a predetermined value S_{incL} for a sulfur poisoning unit S_{inc}, which is a variable representing the amount of sulfur poisoning per execution cycle of this routine. The predetermined amount S_{incL} is obtained using a map for a low sulfur fuel or using calculations for low sulfur fuel based on a fuel injection amount Q from the fuel injection valves 58 and the number of revolutions NE of the engine 2. At subsequent step S106, the ECU 70 substitutes a predetermined value S_{maxL} for a maximum poisoning amount Sₘₐₓ, which is a variable used when starting a sulfur emitting control. At subsequent step S108, the ECU 70 substitutes a predetermined value S_{minL} for a minimum poisoning amount Sₘᵢₙ, which is a variable used when ending the sulfur emitting control. Thereafter, the ECU 70 ends the routine. The sulfur emitting process is executed during the sulfur poisoning elimination control and includes the temperature increase process and the air-fuel ratio lowering process. Specifically, after the temperature increase process, in which the catalyst bed temperatures of the first and second catalytic converters 36, 38 are increased, the air-fuel ratio lowering process is executed. In the air-fuel ratio lowering process, sulfur components are emitted from the NOx occlusion-reduction catalysts so that the catalysts are restored from the sulfur poisoned state.

On the other hand, when judging that the switch 84 is on, the ECU 70 proceeds to step S110. At step S110, the ECU 70 substitutes a predetermined value S_{incH} for the sulfur poisoning unit S_{inc}. The predetermined amount S_{incH} is obtained using a map for a high sulfur fuel or using calculations for high sulfur fuel based on the fuel injection amount Q from the fuel injection valves 58 and the number of revolutions NE of the engine 2. At subsequent step S112, the ECU 70 substitutes a predetermined value S_{maxH} for the maximum poisoning amount Sₘₐₓ. At subsequent step S114, the ECU 70 substitutes a predetermined value S_{mixH} for the minimum poisoning amount Sₘᵢₙ. Thereafter, the ECU 70 ends the routine.

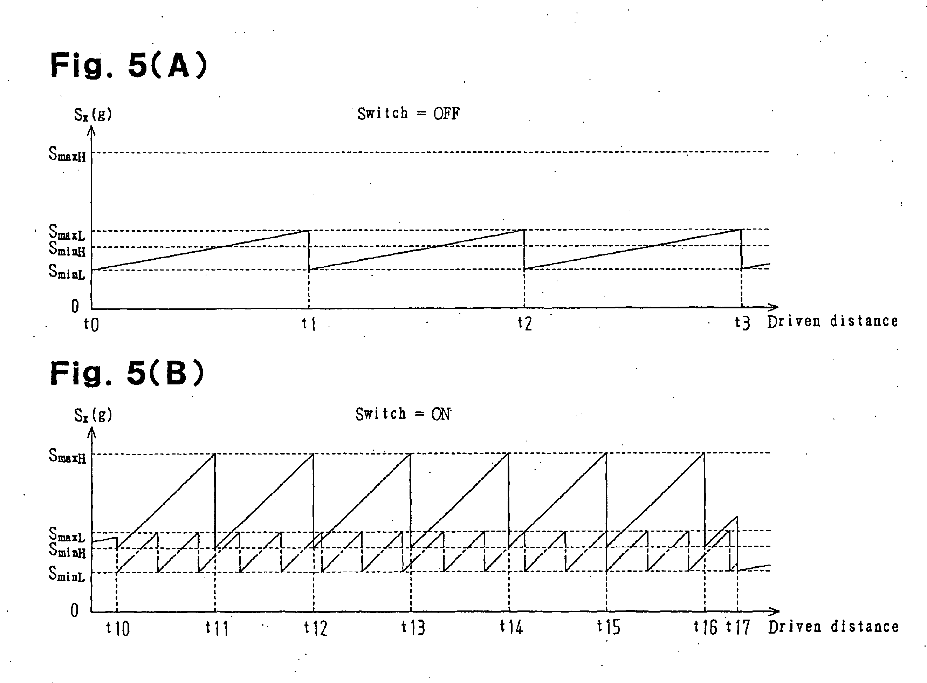

The predetermined value S_{incL} is less than the predetermined value S_{incH}. As shown in Fig. 5, the predetermined value S_{maxL} is less than the predetermined value S_{maxH}, and the predetermined value S_{minL} is less than the predetermined value S_{minH}. Also, a value (S_{maxH} - S_{minH}) obtained by subtracting the predetermined value S_{minH} from the predetermined value S_{maxH} is more than a value (S_{maxL} - S_{minL}) obtained by subtracting the predetermined value S_{minL} from the predetermined value S_{maxL}. The predetermined values S_{incH}, S_{maxH}, S_{minH} are determined on the assumption that a fuel having the highest sulfur concentration among the currently known types of fuel is used.

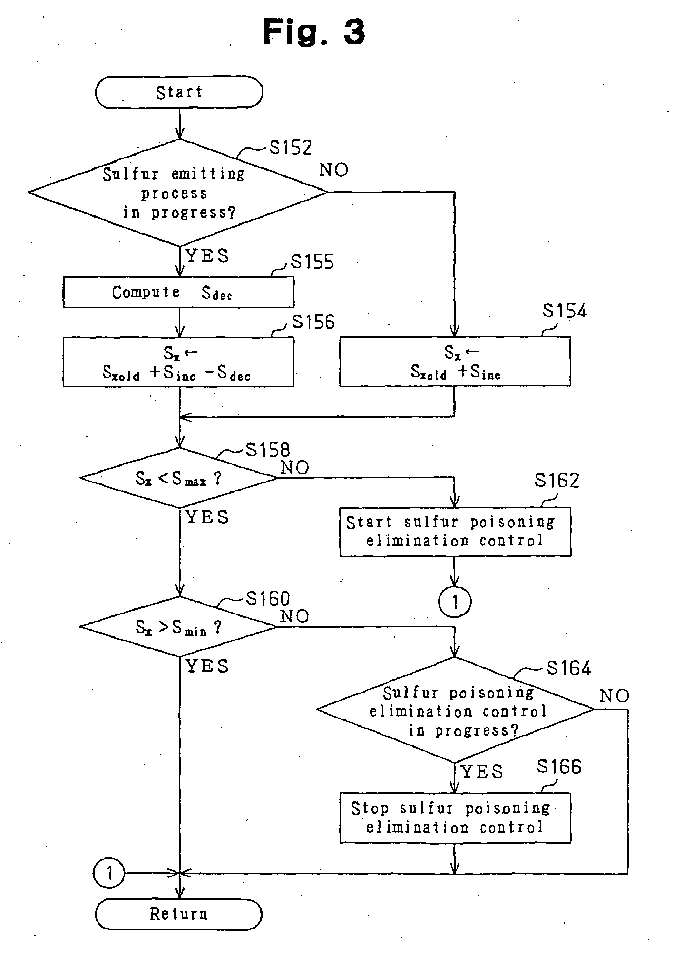

Next, based on the sulfur poisoning unit S_{inc}, the maximum poisoning amount Sₘₐₓ and the minimum poisoning amount Sₘᵢₙ, which are set in the switch judging routine shown in Fig. 2, the ECU 70 executes a sulfur poisoning amount computing routine. The sulfur poisoning amount computing routine will now be described with reference to Fig. 3. This routine is executed at the same cycle as the switch judging routine shown in Fig. 2. The routine of Fig. 3 is executed subsequent to the switch judging routine.

When the sulfur poisoning amount computing routine is started, the ECU 70 judges whether the sulfur emitting process is currently executed at step S152. When judging that the sulfur emitting process is not currently executed, the ECU 70 proceeds to step S154. At step 154, the ECU 70 computes a sulfur poisoning amount Sₓ according to an equation 1: Sₓ ← S_{xold} + S_{inc}.

A previous cycle value S_{xold} on the right side of the equation 1 is the sulfur poisoning amount Sₓ that was computed in the previous execution of this routine. The sulfur poisoning unit S_{inc} on the right side of the equation 1 is the sulfur poisoning amount per execution cycle of this routine. As described above, based on whether the switch 84 is on, one of the predetermined values S_{incL} and S_{incH} is substituted for the sulfur poisoning unit S_{inc}.

At subsequent step S158, the ECU 70 judges whether the sulfur poisoning amount Sₓ is less than the maximum poisoning amount Sₘₐₓ. The maximum poisoning amount Sₘₐₓ is set for determining whether the sulfur emitting process should be started and is related to the amount of sulfur poisoning of the NOx occlusion-reduction catalysts of the first and second catalytic converters 36, 38. Depending of whether the switch 84 is on, one of the predetermined values S_{maxL} and S_{maxH} is substituted for the maximum poisoning amount Sₘₐₓ.

When judging that the sulfur poisoning amount Sₓ is less than the maximum poisoning amount Sₘₐₓ, the ECU 70 proceeds to step S160. At step 160, the ECU 70 judges whether the sulfur poisoning amount Sₓ is more than the minimum poisoning amount Sₘᵢₙ. The minimum poisoning amount Sₘᵢₙ is set for determining whether the sulfur emitting process should be ended and is related to the amount of sulfur poisoning of the NOx occlusion-reduction catalysts of the first and second catalytic converters 36, 38. Depending of whether the switch 84 is on, one of the predetermined values S_{minL} and S_{minH} is substituted for the minimum poisoning amount Sₘᵢₙ.

When judging that the sulfur poisoning amount Sₓ is more than the minimum poisoning amount Sₘᵢₙ, the ECU 70 ends this routine.

Unless the sulfur emitting process is being executed, the computation of the equation 1 is repeated every time the sulfur poisoning amount computing routine is executed. As a result, the sulfur poisoning amount Sₓ is gradually increased and eventually exceeds the maximum poisoning amount Sₘₐₓ. Then, the ECU 70 proceeds to step S162 instead of step S160 after step 158, and starts the sulfur poisoning elimination control. When the sulfur poisoning elimination control is executed, the temperature increase process, in which the NOx occlusion-reduction catalysts of the first and second catalytic converters 36, 38 are heated, and the air-fuel ratio lowering process, in which the air-fuel ratio of exhaust gas is made rich by fuel addition from the fuel adding valve 68, are executed. By the air-fuel ratio lowering process, the air-fuel ratio of exhaust gas is lowered to a value (for example, 14.0), which is slightly lower than the stoichiometric air-fuel ratio (14.7).

In the subsequent execution of this routine, when the temperature increase process in the sulfur poisoning elimination control is being executed but the sulfur emitting process by the air-fuel ratio lowering process has not been started, the ECU 70 proceeds to step S154 after step S152. At step S154, the ECU 70 executes the computation of the equation 1 as described above. Therefore, in this case, the sulfur poisoning amount Sₓ has not started decreasing.

When, based on the exhaust temperature Tₑₓᵢₙ detected by the first exhaust temperature sensor 44 and the driving condition of the diesel engine 2, it is presumed that the catalyst bed temperature of the filter 38a has reached the target catalyst bed temperature (for example, 650°C), the sulfur emitting process by the air-fuel ratio lowering process is started. In the sulfur emitting process, the air-fuel ratio of exhaust gas is adjusted to a target air-fuel ratio (14.0) by addition of fuel from the fuel adding valve 68. The air-fuel ratio is adjusted to the target air-fuel ratio through feedback control of the amount of added fuel based on the detection value of the second air-fuel ratio sensor 48.

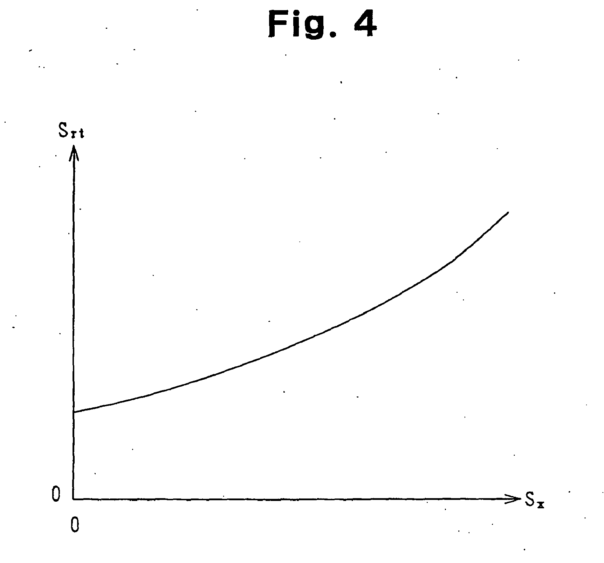

When the sulfur poisoning emitting process has been started in this manner, the ECU 70 judges that the sulfur emitting process is being executed at step S152. When judging that the sulfur emitting process is currently executed, the ECU 70 proceeds to step S155. At step 155, the ECU 70 computes the sulfur emitting amount S_{dec} according to an equation 2: S_{dec} ← the execution cycle of the routine × Sᵣₜ. The sulfur emitting amount S_{dec} represents the amount of sulfur emitted from the NOx occlusion-reduction catalysts of the first and second catalytic converters 36, 38 per execution cycle of the routine. The sulfur emitting amount Sᵣₜ represents the amount of sulfur emitted from the NOx occlusion-reduction catalysts at the target catalyst bed temperature per unit time (gram/second). The sulfur emitting amount Sᵣₜ is set based on the sulfur poisoning amount Sₓ as shown in Fig. 4. As shown in Fig. 4, the sulfur emitting amount Sᵣₜ is increased as the sulfur poisoning amount Sₓ is increased. This shows that the sulfur emitting efficiency is increased as the sulfur poisoning amount Sₓ is increased.

At subsequent step S156, the ECU 70 computes the sulfur poisoning amount Sₓ of the NOx occlusion-reduction catalysts of the first and second catalytic converters 36, 38 according to an equation 3: Sₓ ← S_{xold} + S_{inc} - S_{dec}. The previous cycle value S_{xold} and the sulfur poisoning unit S_{inc} on the right side of the equation 3 are the same as those on the right side of the equation 1. The sulfur poisoning unit S_{inc} is significantly less than the sulfur emitting amount S_{dec}. Therefore, the sulfur poisoning amount Sₓ is decreased by the computation of the equation 3. This means that sulfur poisoning is eliminated.

When judging that the sulfur poisoning amount Sₓ is less than the maximum poisoning amount Sₘₐₓ at subsequent step S158, and that the sulfur poisoning amount Sₓ is more than the minimum poisoning amount Sₘᵢₙ at subsequent S160, the ECU 70 temporarily suspends the routine.

As long as the sulfur emitting process is continued, the computation of the equation 3 is repeated every time the sulfur poisoning amount computing routine is executed. As a result, the sulfur poisoning amount Sₓ is gradually decreased and eventually becomes equal to less than the minimum poisoning amount Sₘᵢₙ. Then, the ECU 70 proceeds to step S164 without temporarily suspending the routine after step S160. At step S164, the ECU 70 judges whether the sulfur poisoning elimination control is being executed. When judging that the sulfur poisoning elimination control is being executed, the ECU 70 proceeds to step S164 and ends the sulfur poisoning elimination control. Accordingly, the sulfur poisoning elimination control is stopped. When the sulfur poisoning elimination control is stopped, the sulfur emitting process is also stopped. Therefore, in subsequent executions of the routine, the ECU 70 proceeds to step S154 instead of step S155 after step 152, and performs the computation of the equation 1. As a result, the sulfur poisoning amount Sₓ is gradually increased and eventually returns to the initial value.

Fig. 5(A) shows changes in the sulfur poisoning amount Sₓ of the NOx occlusion-reduction catalysts of the first and second catalytic converters 36, 38 when the switch 84 is off. As shown in Fig. 5(A), when the sulfur poisoning amount Sₓ reaches the maximum poisoning amount Sₘₐₓ (Sₘₐₓ = S_{maxL}) at points in time corresponding to driven distances t1, t2, t3, the sulfur poisoning elimination process is executed. Accordingly, the sulfur poisoning amount Sₓ is reduced to the minimum poisoning amount Sₘᵢₙ (Sₘᵢₙ = S_{minL}). Since the sulfur concentration in the fuel is low, the increase in the sulfur poisoning amount Sₓ due to increase in the driven distance is relatively slow.

Fig. 5(B) shows changes in the sulfur poisoning amount Sₓ of the NOx occlusion-reduction catalysts of the first and second catalytic converters 36, 38 when the switch 84 is on. Suppose that the switch 84 is turned on from the off state at a certain point in time that corresponds to a driven distance t10, and that the switch 84 is turned off after a certain period of time. When the switch 84 is turned on, the predetermined value S_{incH} is substituted for the sulfur poisoning unit S_{inc} instead of the predetermined value S_{incL}. Likewise, the predetermined value S_{maxH} is substituted for the maximum poisoning amount Sₘₐₓ instead of the predetermined value S_{maxL}. Also, the predetermined value S_{minH} is substituted for the minimum poisoning amount Sₘᵢₙ instead of the predetermined value S_{minL}. When the switch 84 is switched off, the predetermined value S_{incL} is substituted for the sulfur poisoning unit S_{inc} instead of the predetermined value S_{incH}. Likewise, the predetermined value S_{maxL} is substituted for the maximum poisoning amount Sₘₐₓ instead of the predetermined value S_{maxH}. Also, the predetermined value S_{minL} is substituted for the minimum poisoning amount Sₘᵢₙ instead of the predetermined value S_{minH}.

As shown in Fig. 5(B), when the sulfur poisoning amount Sₓ reaches the maximum poisoning amount Sₘₐₓ (Sₘₐₓ = S_{maxH}) at points in time corresponding to driven distances t11, t12, t13, t14, t15, and t16, the sulfur emitting process is executed. Accordingly, the sulfur poisoning amount Sₓ is reduced to the minimum poisoning amount Sₘᵢₙ (Sₘᵢₙ = S_{minH}). Since the sulfur concentration in the fuel is high, the increase in the sulfur poisoning amount Sₓ due to increase in the driven distance is relatively fast.

Since the sulfur emitting process is executed immediately after the switch 84 is turned on from the off state, the sulfur poisoning amount Sₓ is reduced to the minimum poisoning amount Sₘᵢₙ (Sₘᵢₙ = S_{minH}) at the point in time that corresponds to the driven distance t10. Also, since the sulfur emitting process is executed immediately after the switch 84 is turned off from the on state, the sulfur poisoning amount Sₓ is reduced to the minimum poisoning amount Sₘᵢₙ (Sₘᵢₙ = S_{minL}) at the point in time that corresponds to the driven distance t17.

Suppose that when the switch 84 is turned on from the off state, only the predetermined value substituted for the sulfur poisoning unit S_{inc} is changed and the predetermined values substituted for the maximum poisoning amount Sₘₐₓ and the minimum poisoning amount Sₘᵢₙ are not changed. An alternate long and short dash line in Fig. 5(B) represents changes in the sulfur poisoning amount Sₓ of the first and second catalytic converters 36, 38 in such a case. In this case, sulfur poisoning amount Sₓ is maintained low. However, in this case, the sulfur emitting process is executed very frequently as shown in Fig. 5(B).

The switch 84 is part of determination means that determines the sulfur concentration level of fuel and part of indicating means that indicates the sulfur concentration level of fuel. The switch judging routine of Fig. 2 executed by the ECU 70 includes a process executed by changing means that changes the control procedure of the sulfur poisoning elimination control.

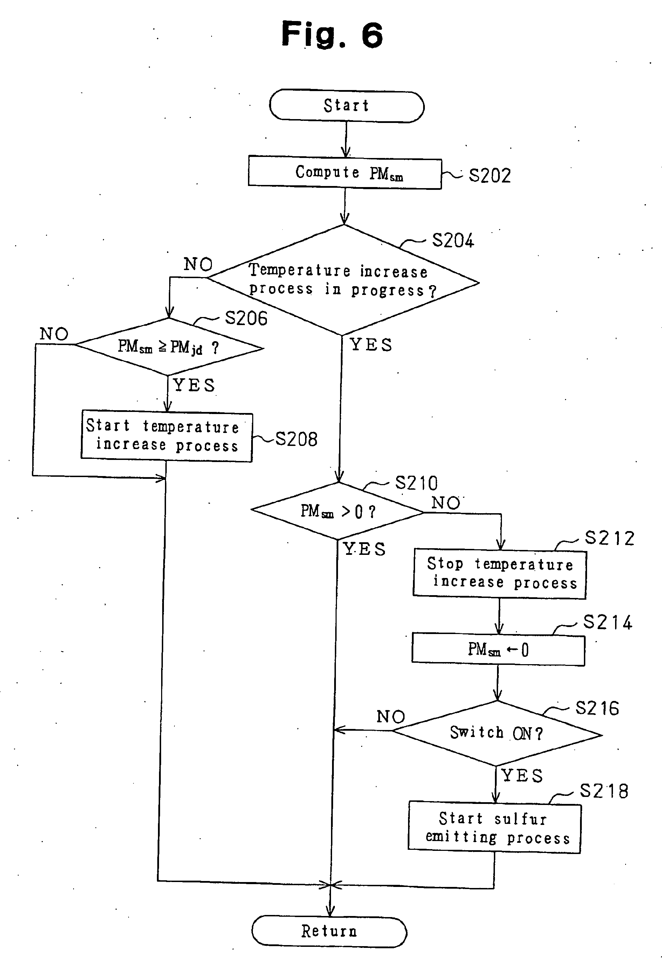

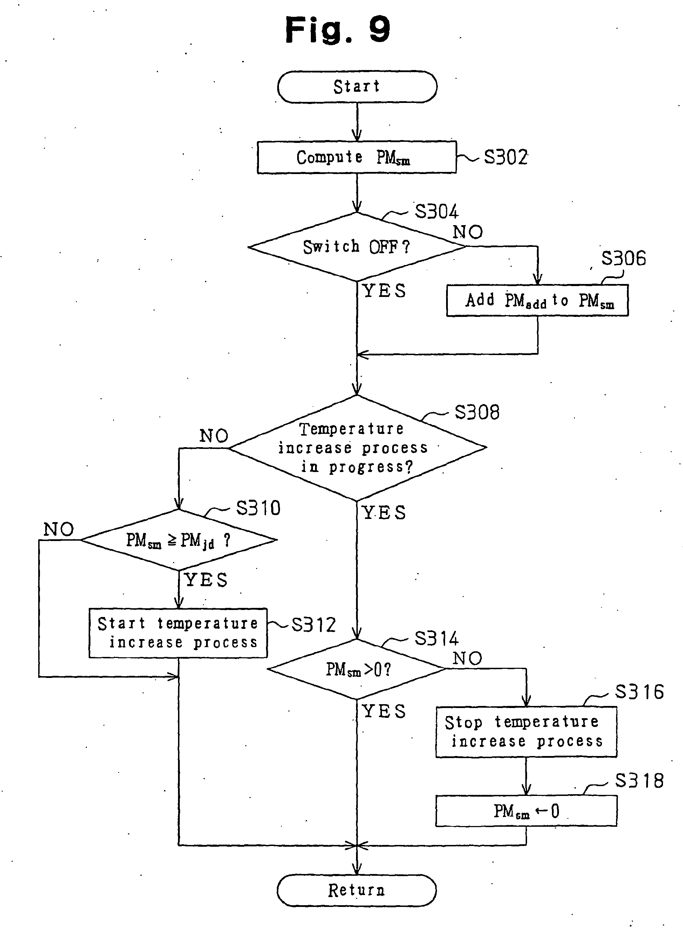

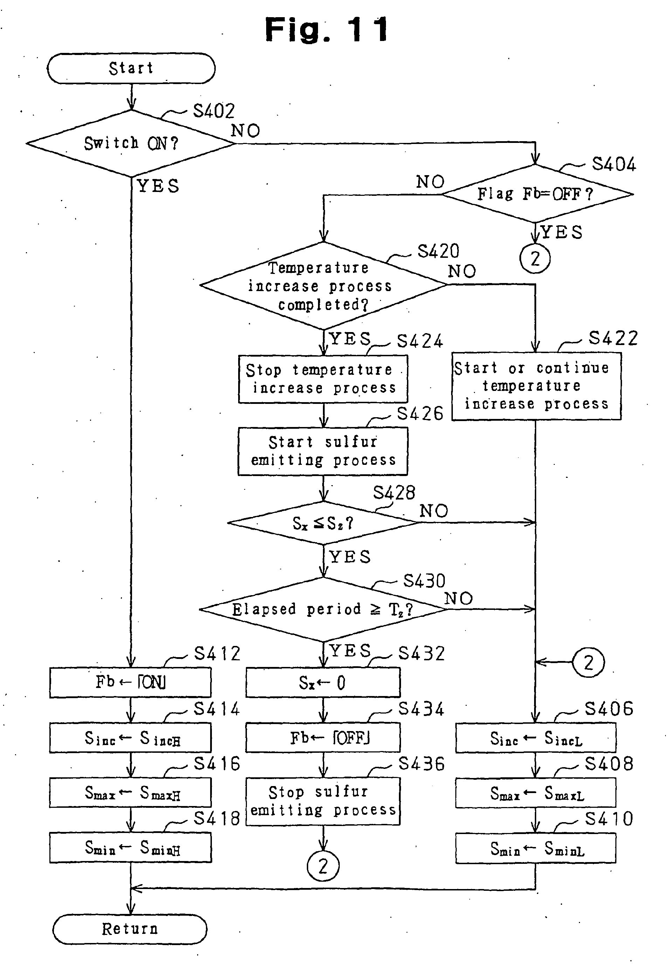

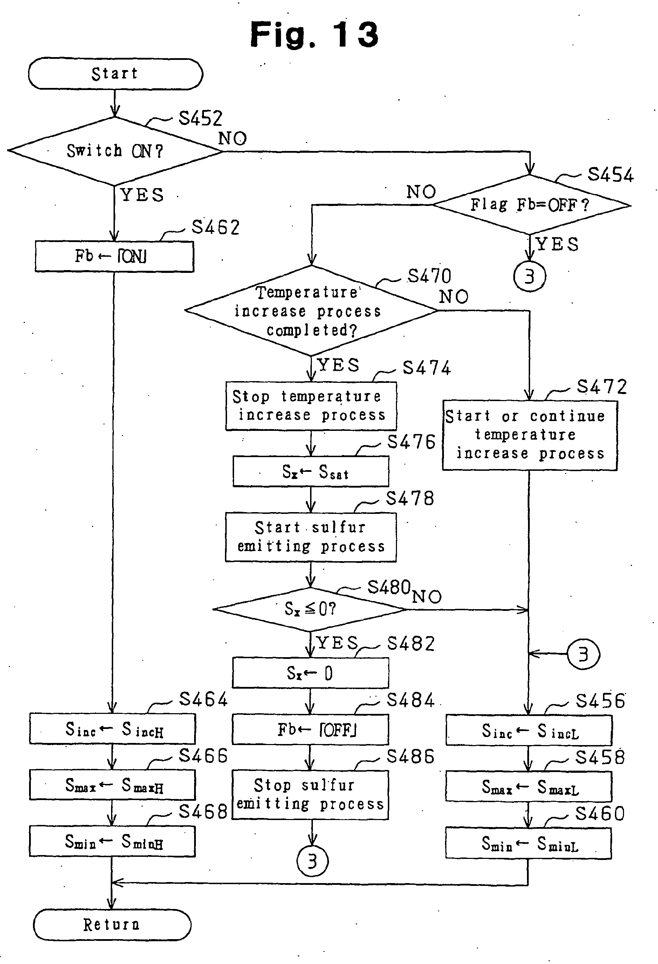

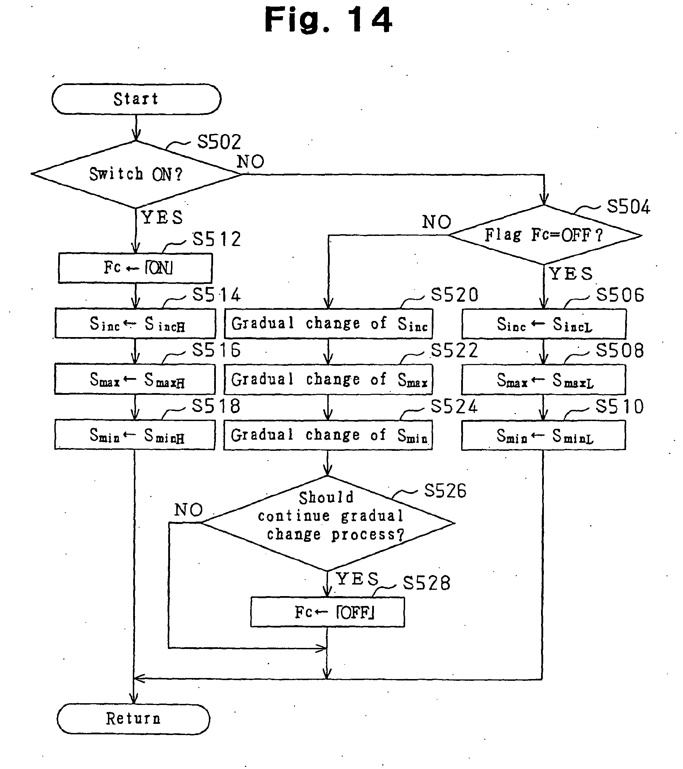

The first embodiment has the following advantages.
(1) The ECU 70 obtains the level of sulfur concentration of fuel simply by judging whether the switch 84 is on. This eliminates the necessity for the ECU 70 to perform complicated procedures such as computation of the actual sulfur concentration of fuel after identifying the condition of fuel supplying and the region where the fuel was supplied. Instead, the ECU 70 is capable of easily executing the appropriate sulfur poisoning elimination control to the NOx occlusion-reduction catalysts of the first and second catalytic converters 36, 38. Further, this prevents the exhaust emission from deteriorating and the fuel efficiency from being reduced.
   Since the switch 84 is manually operated, the ECU 70 does not need to have any mechanism or perform any process for determining the sulfur concentration level. This simplifies the configuration of the ECU 70 and reduces the load on the ECU 70. Accordingly, the manufacturing cost can be reduced.
   When the switch 84 is turned on, the control procedure of the sulfur poisoning elimination control is switched to a mode that corresponds to a high sulfur concentration level. When the switch 84 is turned off, the control procedure is switched to a mode that corresponds to a low sulfur concentration level. Therefore, the sulfur poisoning elimination control is executed in an appropriate mode in accordance with the sulfur concentration level. This prevents the exhaust emission from deteriorating and the fuel efficiency from being reduced.
(2) When the switch 84 is turned on, the sulfur poisoning unit S_{inc} is increased, and the interval of the sulfur emitting process in the sulfur poisoning elimination control is shortened. Accordingly, the NOx occlusion-reduction performance of the NOx occlusion-reduction catalysts is prevented from being degraded by sulfur poisoning caused by a high sulfur fuel.
   When the switch 84 is on, a parameter for determining the interval of the sulfur emitting process, that is, the maximum poisoning amount Sₘₐₓ and the minimum poisoning amount Sₘᵢₙ have relatively great values. Therefore, as shown in Fig. 5(B), even if a high sulfur fuel is used, the interval of the sulfur emitting process is not significantly shortened and maintained relatively long. In this manner, the frequency of the sulfur emitting process is prevented from being increased to some extent. This prevents the fuel efficiency from being reduced. In addition, since the sulfur poisoning amount Sx is maintained relatively great, the fuel emitting process is executed in a state where the sulfur emitting efficiency is relatively high as shown in Fig. 4. This further suppresses reduction of the fuel efficiency.
(3) The predetermined values S_{incH}, S_{maxH}, S_{minH} used for a high sulfur fuel are determined on the assumption that a fuel having the highest sulfur concentration among the currently known types of fuel is used. Therefore, when the switch 84 is on, the sulfur poisoning elimination control is executed while regarding fuel of any level of sulfur concentration as a fuel having the highest sulfur concentration. Therefore, sulfur poisoning is prevented from being excessive, and white smoke and smell are prevented during the sulfur poisoning elimination control.
   Hereinafter, a second embodiment of the present invention will be described with reference to the drawings.
   In the second embodiment, when the switch 84 is on, the sulfur emitting process is executed not only by using the usual sulfur poisoning elimination control, but also a filter regeneration control.
   In the second embodiment, the switch judging routine of Fig. 2 does not need to be executed. When the sulfur poisoning amount computing routine shown in Fig. 3 is executed, the sulfur poisoning unit S_{inc} is fixed to the predetermined value, the maximum poisoning amount Sₘₐₓ is fixed to the predetermined value S_{maxL}, and the minimum poisoning amount Sₘᵢₙ is fixed to the predetermined value S_{minL}. Further, the filter regeneration routine shown in Fig. 6 is executed. Other processes and the hardware configuration are the same as those of the first embodiment.
   The filter regeneration routine shown in Fig. 6 is repeatedly executed by the ECU 70 at a predetermined interval. That is, the filter regeneration routine is a periodical interruption process routine. When this routine is started, the ECU 70 computes a particulate matter accumulation amount PMₛₘ according to an equation 4: PMₛₘ ← PM_{smold} + PMₑ - PM_{c} at step S202.
   A previous cycle value PM_{smold} on the right side of the equation 4 is the amount of accumulated particulate matter computed in the current execution of the routine. A particulate matter emission amount PMₑ is the amount of particulate matter exhausted from the combustion chambers 4 of the diesel engine 2 in the execution cycle of the routine. The particulate matter emission amount PMₑ is obtained referring to the current number of revolutions NE of the engine 2 and the load on the engine 2 based on a map that is obtained in advance through experiments using the number of revolutions NE of the engine 2 and the load (the fuel injection amount of the fuel injection valves 58) as parameters. An oxidation amount PMc is the amount of particulate matter that is removed through oxidation in the execution cycle of the routine. The oxidation amount PM_{c} is obtained referring to the current catalyst bed temperature and the intake flow rate based on a map that is obtained in advance through experiments using the catalyst bed temperature of the filter 38a (the exhaust temperature Tₑₓₒᵤₜ detected by the second exhaust temperature sensor 46) and the intake flow rate as parameters.
   After computing the particulate matter accumulation amount PMₛₘ in this manner, the ECU 70 judges whether the temperature increase process for regenerating the filter 38a is currently executed at step S204. When judging that the temperature increase process is not being executed, the ECU 70 proceeds to step S206 and judges whether the particulate matter accumulation amount PMₛₘ is equal to or more than a reference accumulation amount PM_{jd}. The reference accumulation amount PM_{jd} is an accumulation amount of particulate matter that is used as a reference for determining whether the temperature increase process in the filter regeneration control can be executed. When judging that the particulate matter accumulation amount PMₛₘ is less than the reference accumulation amount PM_{jd}, the ECU 70 determines that the temperature increase process should not be executed at the moment and ends the routine.
   In the subsequent execution of the routine, if it is determined that the particulate matter accumulation amount PMₛₘ is less than the reference amount PM_{jd}, the temperature increase process is not executed. However, if this routine is repeatedly executed, a value represented by PMₑ - PM_{c} on the right side of the equation 4, or the amount of particulate matter accumulated in the execution cycles of the routine, is gradually accumulated. As a result, the particulate matter accumulation amount PMₛₘ is gradually increased and eventually becomes equal to or more than the reference accumulation value PM_{jd}. Then, the ECU 70 proceeds to step S208 without temporarily suspending the routine after step S206. At step S208, the ECU 70 starts the temperature increase process and ends the routine.
   After starting the temperature increase process, the ECU 70 causes the fuel adding valve 68 to add fuel to exhaust gas. This increases the catalyst bed temperature of the NOx occlusion-reduction catalyst of the second catalytic converter 38 to a target catalyst bed temperature (for example, 650°C). As a result, particulate matter that has been trapped by the filter 38a is oxidized and removed so that the filter 38a is regenerated. Through the temperature increase process, not only the catalyst bed temperature of the NOx occlusion-reduction catalyst of the second catalytic converter 38, but also the catalyst bed temperature of the NOx occlusion-reduction catalyst 36a of the first catalytic converter 36 is increased.
   If the temperature increase process is started at step S208, the ECU 70 judges that the temperature increase process is currently executed at step S204 in the subsequent execution of the routine and proceeds to step S210. At step S210, the ECU 70 judges whether the particulate matter accumulation amount PMₛₘ is more than zero. Although the particulate matter emission amount PMₑ in the equation 4 is not changed by a great degree by the execution of the temperature increase process, the oxidation amount PM_{c} is rapidly increased by the execution of the temperature increase process. Therefore, during the temperature increase process, the particulate matter accumulation amount PMₛₘ is rapidly increased. That is, particulate matter accumulated on the filter 38a is rapidly oxidized and removed. Step S210 is a step for determining whether particulate matter has been completely removed. If the particulate matter accumulation amount PMₛₘ is more than zero, the ECU 70 ends the routine. As a result, the temperature increase process is continued after the routine is ended. That is, the ECU 70 determines that the regeneration of the filter 38a has not been completed.
   Thereafter, the computation of the equation 4 is repeated every time the filter regeneration routine is executed. As a result, when the particulate matter accumulation amount PMₛₘ becomes equal to or less than zero, the ECU 70 proceeds to step S212 without temporarily suspending the routine after step S210. At step S212, the ECU 70 ends the temperature increase process. That is, the ECU 70 determines that the regeneration of the filter 38a has been completed. This stops the temperature increase process and causes the fuel adding valve 68 to stop adding fuel to exhaust gas. Thereafter, at subsequent step S214, the ECU 70 clears the particulate matter accumulation amount PMₛₘ to zero. At subsequent step S216, the ECU 70 judges whether the switch 84 is on. When judging that the switch 84 is off, the ECU 70 ends this routine. In this manner, a normal filter regeneration control is executed when the switch 84 is off.
   On the other hand, when judging that the switch 84 is on, the ECU 70 proceeds to step S218. At step S218, the ECU 70 starts the sulfur emitting process. Thereafter, the ECU 70 ends the routine. The sulfur emitting process, which is started in the filter regeneration routine shown in Fig. 6, is basically the same as the sulfur emitting process in the sulfur poisoning eliminating control according to the first embodiment. However, the sulfur emitting process of the second embodiment is different from that of the first embodiment in that an air-fuel ratio lowering process is executed on the assumption that the sulfur poisoning amount Sₓ is equal to the predetermined value S_{maxH} so that the sulfur poisoning amount Sₓ is decreased from the predetermined value S_{maxH} to the predetermined value S_{minH}. Accordingly, the air-fuel ratio is decreased to, for example, 14.0. When the air-fuel ratio lowering process is executed, the catalyst bed temperatures of the NOx occlusion-reduction catalysts of the first and second catalytic converters 36, 38 have already been increased to a level that enables sulfur to be emitted by the temperature increase process. Therefore, in the sulfur emitting process, the air-fuel lowering process is executed immediately without executing the temperature increase process.
   Normally, the temperature increase process in the filter regeneration control is executed more frequently than the temperature increase process and the sulfur emitting process in the sulfur poisoning eliminating control. Therefore, when the switch 84 is on, the sulfur emitting process is executed with a frequency that is close to the frequency with which the sulfur emitting process is executed in the first embodiment when a high sulfur fuel is used.
   When the switch 84 is turned off from the on state, and is turned on from the off state, the sulfur emitting process is executed immediately thereafter as in the first embodiment.

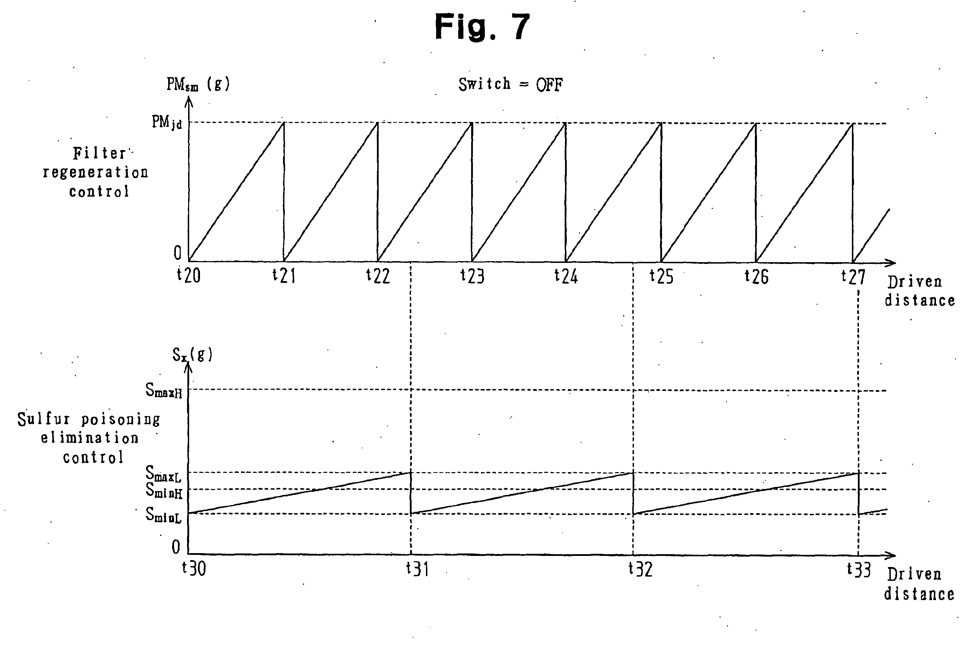

   Fig. 7 shows changes in the particulate matter accumulation amount PMₛₘ caused by the filter regeneration control and changes in the sulfur poisoning amount Sₓ caused by the sulfur poisoning elimination control when the switch 84 is off. As shown in Fig. 7, the temperature increase process in the filter regeneration control is started at points in time that correspond to the driven distances t20, t21, t22, t23, t24, t25, t26, and t27. The sulfur emitting process in the sulfur poisoning elimination control is started at points in time that correspond to the driven distances t30, t31, t32, and t33. In this manner, the temperature increase process in the filter regeneration control is executed independently from the sulfur emitting process in the sulfur poisoning elimination control.

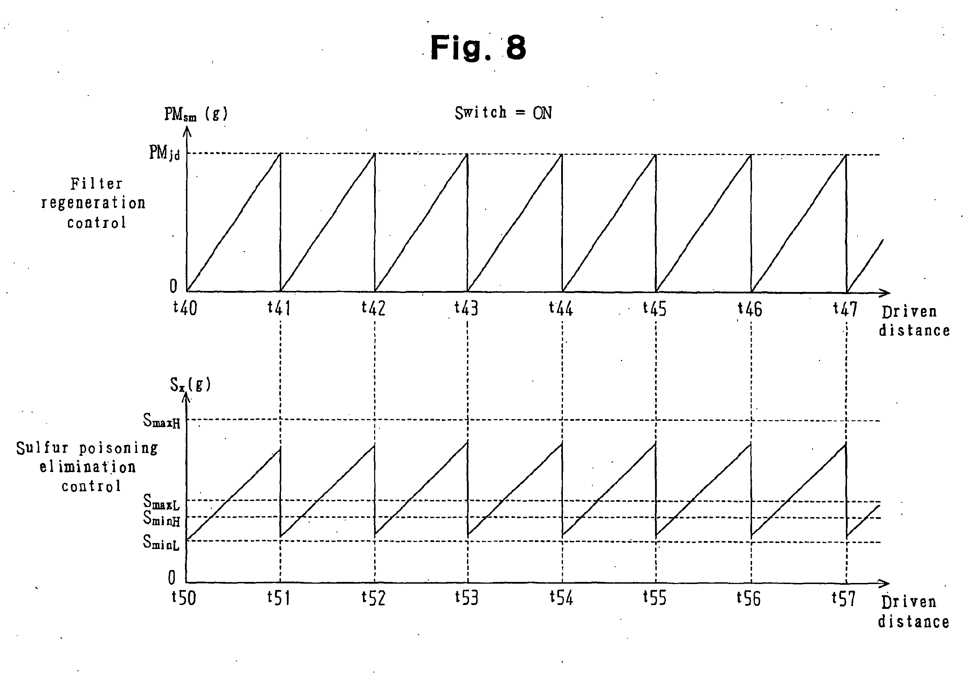

   Fig. 8 shows changes in the particulate matter accumulation amount PMₛₘ caused by the filter regeneration control and changes in the sulfur poisoning amount Sₓ caused by the sulfur poisoning elimination control when the switch 84 is off. As shown in Fig. 8, the temperature increase process in the filter regeneration control is started at points in time that correspond to the driven distances t40, t41, t42, t43, t44, t45, t46, and t47. The sulfur emitting process in the sulfur poisoning elimination control is started at points in time that correspond to the driven distances t50, t51, t52, t53, t54, t55, t56, and t57. In this manner, the temperature increase control in the filter regeneration process is executed in succession to the sulfur emitting process in the sulfur poisoning elimination control. That is, the temperature increase process in the filter regeneration control and the sulfur emitting process in the sulfur poisoning elimination control are in synchronization.
   The switch 84 is part of the determination means and part of the indicating means. The filter regeneration routine of Fig. 6 executed by the ECU 70 includes a process executed by changing means that changes the control procedure of the sulfur poisoning elimination control and the control procedure of the filter regeneration control.
   In addition to the advantages (1) and (3) of the first embodiment, the second embodiment has the following advantage.
(4) As shown in Figs. 7 and 8, when the switch 84 is off, the temperature increase process in the filter regeneration control and the sulfur emitting process in the sulfur poisoning elimination control are independent from each other and are not in synchronization. However, when the switch 84 is on, the sulfur emitting process in the sulfur poisoning elimination control is executed in succession to the temperature increase process in the filter regeneration control, and is in synchronization with the temperature increase process in the filter regeneration control. The interval of the temperature increase process in the filter regeneration control is shorter than the interval of the' sulfur emitting process in the sulfur poisoning elimination control. Therefore, when the switch 84 is on, the frequency of the execution of the sulfur emitting process with the switch 84 on is increased in accordance with a high sulfur fuel. As a result, the sulfur poisoning elimination control of the NOx occlusion-reduction catalysts of the first and' second catalytic converters 36, 38 is appropriately and easily executed. Moreover, since the catalyst bed temperatures of the NOx occlusion-reduction catalysts of the first and second catalytic converters 36, 38 have already been increased through the temperature increase process when the filter regeneration control is executed, the temperature increase process does not need to be executed again, and the sulfur emitting process is executed immediately. Thus, even if the frequency of the sulfur emitting process is increased, the fuel efficiency is prevented from being reduced.
   Hereinafter, a third embodiment of the present invention will be described with reference to the drawings.
   In the third embodiment, when the switch 84 is on, not only the control procedure of the normal sulfur poisoning elimination control, but also the control procedure of a filter regeneration control is changed. Specifically, the interval of the temperature increase process in the filter regeneration control is shortened to increase the frequency of the temperature increase process executed for regenerating the filter 38a. The control procedure of the sulfur poisoning elimination control is the same for the case where the switch 84 is on and the case where the switch 84 is off.
   In the third embodiment, the switch judging routine of Fig. 2 does not need to be executed. When the sulfur poisoning amount computing routine shown in Fig. 3 is executed, the sulfur poisoning unit S_{inc} is fixed to the predetermined value, the maximum poisoning amount Sₘₐₓ is fixed to the predetermined value S_{maxL}, and the minimum poisoning amount Sₘᵢₙ is fixed to the predetermined value S_{minL}. Further, the filter regeneration routine shown in Fig. 9 is executed. Other processes and the hardware configuration are the same as those of the first embodiment.
   The filter regeneration routine shown in Fig. 9 is repeatedly executed by the ECU 70 at a predetermined interval. That is, the filter regeneration routine is a periodical interruption process routine. When this routine is started, the ECU 70 computes a particulate matter accumulation amount PMₛₘ according to the equation 4 at step S302.
   At subsequent step S304, the ECU 70 judges whether the switch 84 is off. When judging that the switch 84 is off, the ECU 70 proceeds to step S308. When judging that the switch 84 is not off, the ECU 70 proceeds to step S306. At step S306, the ECU 70 adds a correction value PM_{add} to the particulate matter accumulation amount PMₛₘ according to an equation 5: PMₛₘ ← PMₛₘ + PM_{add}. Thereafter, the ECU 70 proceeds to step S308.
   In the subsequent portion of this routine, step S308, step S310, step S312, step S314, step S316, and step S318 are the same as step S204, step S206, step S208, step S210, step S212, and step S214 of the filter regeneration routine shown in Fig. 6, respectively. However, after clearing the particulate matter accumulation amount PMₛₘ to zero at step S318, the ECU 70 ends the routine.
   According to the filter regeneration routine shown in Fig. 6, when the switch 84 is on, increase of the particulate matter accumulation amount PMₛₘ is rapider compared to a case where the switch is off. The particulate matter accumulation amount PMₛₘ becomes equal to or more than the reference accumulation amount PM_{jd} at an early stage. This shortens the interval of the temperature increase process in the filter regeneration control.
   When the switch 84 is turned off from the on state, and is turned on from the off state, the sulfur emitting process is executed immediately thereafter as in the first embodiment.

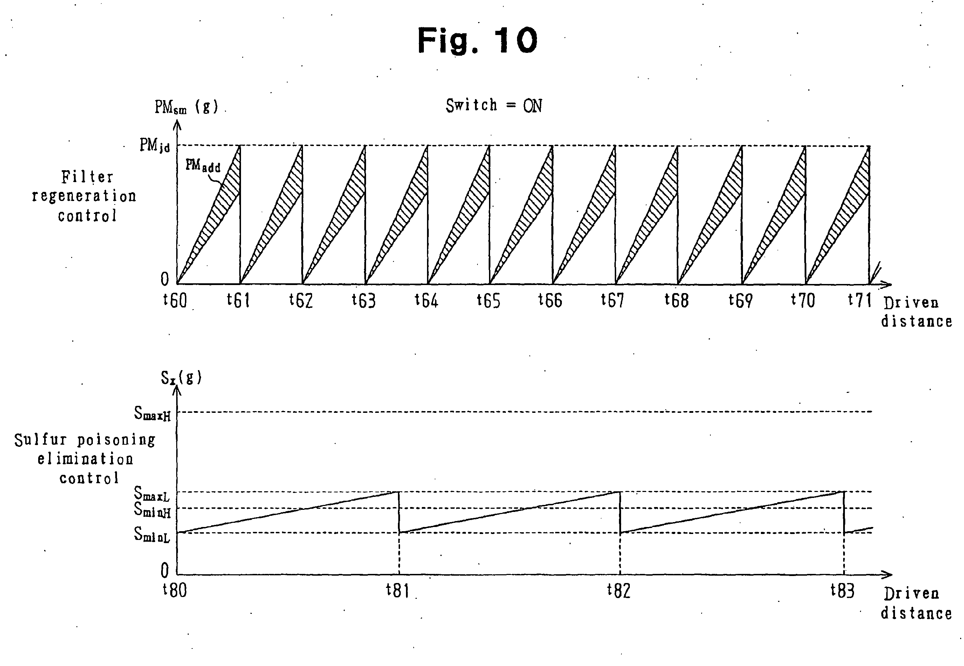

   Fig. 10 shows changes in the particulate matter accumulation amount PMₛₘ caused by the filter regeneration control and changes in the sulfur poisoning amount Sₓ caused by the sulfur poisoning elimination control when the switch 84 is on. Changes in the particulate matter accumulation amount PMₛₘ caused by the filter regeneration control and changes in the sulfur poisoning amount Sₓ caused by the sulfur poisoning elimination control when the switch 84 is off are the same as those shown in Fig 7.
   As shown in Fig. 10, the temperature increase process in the filter regeneration control is started at points in time that correspond to driven distances t60, t61, t62, t63, t64, t65, t66, t67, t70, and t71. In this manner, since the particulate matter accumulation amount PMₛₘ is rapidly increased due to the addition of the correction value PM_{add} when the switch 84 is on, the temperature increase process in the filter regeneration control is executed with a great frequency at an interval that is shorter than that in the case shown in Fig. 7.
   The switch 84 is part of the determination means and part of the indicating means. The filter regeneration routine of Fig. 9 executed by the ECU 70 includes a process executed by changing means that changes the control procedure of the filter regeneration control.
   The third embodiment has the following advantage.
(5) In the third embodiment, the control procedure of the sulfur poisoning elimination control is not changed depending on whether the switch 84 is on or off. However, the control procedure filter regeneration control is changed such that the temperature increase process is executed with a great frequency at a short interval compared to the case where the switch 84 is off.
   When fuel is changed to a high sulfur fuel, and the NOx occlusion-reduction catalysts of the first and second catalytic converters 36, 38 are overly poisoned with sulfur, execution of the sulfur emitting process in the sulfur poisoning elimination control causes a great amount of sulfur components to be emitted from the NOx occlusion-reduction catalysts at a time. As a result, white smoke and smell may be produced. However, when the sulfur poisoning is excessive, the sulfur components poisoning the NOx occlusion-reduction catalysts are also partly emitted through the temperature increase process in the filter regeneration control. Therefore, when the switch 84 is on, a highly frequent execution of the temperature increase process in the filter regeneration control greatly decreases the amount of sulfur components poisoning the NOx occlusion-reduction catalysts. This suppresses white smoke and smell, which would be produced by emission of a great amount of sulfur components during execution of the sulfur poisoning elimination control at a time. Also, since sulfur is frequently emitted from the NOx occlusion-reduction catalysts by the temperature increase process in the filter regeneration control, the sulfur poisoning elimination control is properly and easily executed regardless of whether the fuel concentration of fuel is high or low.
   Hereinafter, a fourth embodiment of the present invention will be described with reference to the drawings.
   In the fourth embodiment, the sulfur poisoning amount Sₓ is reduced to the lowest level when the switch 84 is turned off from the on state. In the fourth embodiment, a switch judging routine shown in Fig. 11 is executed instead of the switch judging routine of Fig. 2. Other processes and the hardware configuration are the same as those of the first embodiment.
   The switch judging routine shown in Fig. 11 is repeatedly executed by the ECU 70 at a predetermined interval. That is, the filter regeneration routine is a periodical interruption process routine. When the switch judging routine is started, the ECU 70 judges whether the switch 84 is on at step S402. When judging that the switch 84 is not on, the ECU 70 proceeds to step S404 and judges whether a lowest poisoning level flag Fb is off. The lowest poisoning level flag Fb is a flag indicating whether a process for decreasing the actual sulfur poisoning amount of the NOx occlusion-reduction catalysts of the first and second catalytic converters 36, 38 to the lowest level is being executed. The process is executed immediately after the switch 84 is turned off from the on state.
   When judging that the flag Fb is off, the ECU 70 proceeds to step S406. At step S406, the ECU 70 substitutes the predetermined value S_{incL} for the sulfur poisoning unit S_{inc}. At subsequent step S408, the ECU 70 substitutes the predetermined value S_{maxL} for the maximum poisoning amount Sₘₐₓ. At subsequent step S410, the ECU 70 substitutes the predetermined value S_{mixL} for the minimum poisoning amount Sₘᵢₙ. Thereafter, the ECU 70 ends the routine. Step S406, step S408, and step S410 are the same as step S104, step S106, and step S108 of the switch judging routine shown in Fig. 2, respectively. In this manner, the predetermined values S_{incL}, S_{maxL}, and S_{minL} are substituted for the sulfur poisoning unit S_{inc}, the maximum poisoning amount Sₘₐₓ, and the minimum poisoning amount Sₘᵢₙ, respectively. In this state, the sulfur poisoning amount computing routine shown in Fig. 3 is executed.
   On the other hand, when judging that the switch 84 is on, the ECU 70 proceeds to step S412. At step S412, the ECU 70 turns the flag Fb on. At subsequent step S414, the ECU 70 substitutes the predetermined value S_{incH} for the sulfur poisoning unit S_{inc}. At subsequent step S416, the ECU 70 substitutes the predetermined value S_{maxH} for the maximum poisoning amount Sₘₐₓ. At subsequent step S418, the ECU 70 substitutes the predetermined value S_{mixH} for the minimum poisoning amount Sₘᵢₙ. Thereafter, the ECU 70 ends the routine. Step S414, step S416, and step S418 are the same as step S110, step S112, and step S114 of the switch judging routine shown in Fig. 2, respectively. In this manner, the predetermined values S_{incH}, S_{maxH}, and S_{minH} are substituted for the sulfur poisoning unit S_{inc}, the maximum poisoning amount Sₘₐₓ, and the minimum poisoning amount Sₘᵢₙ, respectively. In this state, the sulfur poisoning amount computing routine shown in Fig. 3 is executed.
   When the driver turns the switch 84 off from the on state thereafter, the ECU 70 proceeds to step S404 after step S402 in the subsequent execution of the routine, and judges whether the flag Fb is off. Since the flag Fb was set on in the previous execution of the routine, the ECU 70 judges that the flag Fb is not off at step S404, and proceeds to step S420. At step S420, the ECU 70 determines whether the temperature increase process has been completed based on the catalyst bed temperature of the filter 38a. The temperature increase process is a process for a sulfur emitting process that is executed when the switch 84 is turned off from the on state. When judging that the temperature increase process has not been completed at step S420, the ECU 70 proceeds to step S422. At step S422, the ECU 70 starts the temperature increase process. Then, after step S406, step S408, and step S410, the ECU 70 ends the routine.
   Thereafter, until the catalyst bed temperature of the filter 38a reaches the target temperature, the ECU 70 judges that the temperature increase process has not been completed at step S420 and continues the temperature increase process at step S422 every time the routine is executed.
   When determining at step S420 that the temperature increase process has been completed based on the fact that the catalyst bed temperature of the filter 38a has reached the target temperature, the ECU 70 proceeds to step S424 and ends the temperature increase process. At subsequent step S426, the sulfur emitting process is started. Accordingly, the air-fuel ratio lowering process is started, and sulfur components poisoning the first and second catalytic converters 36, 38 start being emitted. The calculation of the sulfur emitting amount S_{dec} using the equation 2 and the calculation of the sulfur poisoning amount Sₓ using the equation 3 are executed during the sulfur emitting process as in the above description of steps S155 and step S166 in the sulfur poisoning amount computing routine shown in Fig. 3.
   At subsequent step S428, the ECU 70 judges whether the sulfur poisoning amount Sₓ is equal to or less than a predetermined value S_{z}. The predetermined value S_{z} is the sulfur poisoning amount of the lowest level and is set to, for example, 0g. When judging that the sulfur poisoning amount Sx is more than the predetermined value Sz, the ECU 70 ends the routine after step S406, step S408, and step S410.
   Thereafter, until the sulfur poisoning amount Sₓ becomes equal to or less than the predetermined value Sₓ through the sulfur emitting process, the ECU 70 judges that the sulfur poisoning amount Sₓ is more than the predetermined value S_{z} at step S428 every time the routine is executed. When the sulfur poisoning amount Sₓ is eventually decreased to a level equal to or less than the predetermined value S_{z}, the ECU 70 judges that the sulfur poisoning amount Sₓ is equal to or less than the predetermined value S_{z} at step S428, and proceeds to step S430. At step S430, the ECU 70 judges whether a period of time that has elapsed from when the sulfur poisoning amount Sₓ is decreased to a level equal to or less than the predetermined value S_{z} is equal to more than a predetermined value T_{z}. The determination of whether the elapsed period of time is equal to or more than the predetermined value T_{z} is performed by executing the sulfur emitting process for a period a little longer than necessary. Accordingly, even if the sulfur concentration of fuel is higher than the assumed maximum value, the present invention can be applied.
   When judging that the elapsed period of time is not equal to or more than the predetermined value T_{z}, the ECU 70 ends the routine after step S406, step S408, and step S410. When judging that the elapsed period of time is more than the predetermined value T_{z}, the ECU 70 proceeds to step S432. At step S432, the ECU 70 clears the sulfur poisoning amount Sₓ to zero. At subsequent step S434, the ECU 70 turns the flag Fb off. At subsequent step S436, the ECU 70 ends the sulfur emitting process, and ends the routine after step S406, step S408, and step S410.

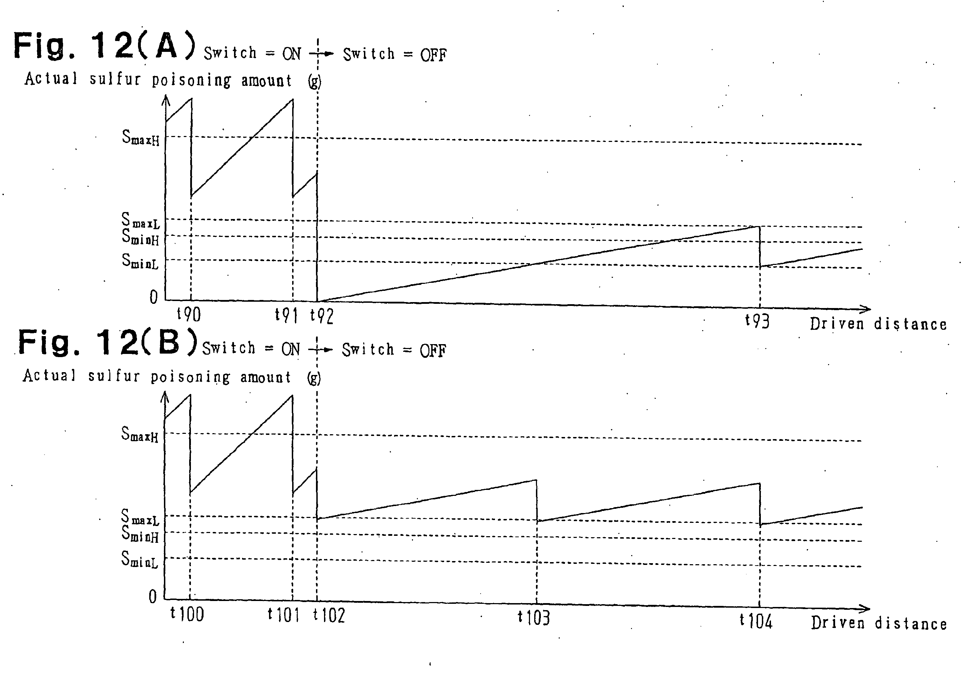

   Fig. 12(A) shows changes in the sulfur poisoning amount Sₓ in a case where the sulfur poisoning amount Sₓ is decreased to the lowest level when the switch 84 is turned off from the on state, that is, changes in the sulfur poisoning amount Sₓ when the switch judging routine shown in Fig. 11 is repeatedly executed. Fig. 12(B) shows changes in the sulfur poisoning amount Sₓ in a case where the sulfur poisoning amount Sₓ is not decreased to the lowest level when the switch 84 is turned off from the on state.
   When the sulfur concentration of fuel is higher than the assumed highest sulfur concentration, the actual sulfur poisoning amount is maintained in a range between a value that is slightly more than the predetermined value S_{minH} and a value that is slightly less than the predetermined value S_{maxH} as shown in Figs. 12(A) and 12(B). When the sulfur concentration of fuel is higher than the assumed highest sulfur concentration in this manner, the sulfur poisoning amount Sx, which is computed by the ECU 70 deviates from the actual sulfur poisoning amount.
   In the example shown in Fig. 12(A), the switch 84 is turned off from the on state at a point in time that corresponds to a driven distance t92. At this time, since the sulfur emitting process is executed for a period slightly longer than necessary, the actual sulfur poisoning amount is decreased to the lowest level (zero). Also, the sulfur poisoning amount Sₓ is cleared to zero at step S432 in the routine shown in Fig. 11. Therefore, the deviation between the sulfur poisoning amount Sₓ and the actual sulfur poisoning amount is eliminated at this point.
   On the other hand, in the example shown in Fig. 12(B), the switch 84 is turned off from the on state at a point in time that corresponds to a driven distance t102. At this time, the sulfur poisoning amount Sₓ is decreased to the predetermined value S_{minH} through the sulfur emitting process executed by turning the switch 84 off from the on state. However, the actual sulfur poisoning amount is more than the predetermined value S_{minH}, and the deviation between the sulfur poisoning amount Sₓ and the actual sulfur poisoning amount remains after the switch 84 is turned off from the on state.
   The switch 84 is part of the determination means and part of the indicating means. The switch judging routine of Fig. 11 executed by the ECU 70 includes a process executed by the changing means that changes the control procedure of the sulfur poisoning elimination control.
   In addition to the advantages (1) to (3) of the first embodiment, the fourth embodiment has the following advantage.
(6) As shown in Fig. 12, the sulfur emitting process is executed when fuel is switched to a low sulfur fuel from a fuel the sulfur concentration of which is higher than the assumed highest sulfur concentration. The sulfur emitting process decreases the sulfur poisoning amount of the first and second catalytic converters 36, 38 to the lowest level (for example, zero). As a result, the deviation between the sulfur poisoning amount Sₓ, which is computed by the ECU 70, and the actual sulfur poisoning amount is eliminated. Therefore, the accuracy of control executed by the ECU 70 is improved. Further, even if a high sulfur fuel and a low sulfur fuel are alternately supplied, the sulfur poisoning amount will not be excessive, and white smoke and smell are prevented.
   Hereinafter, a fifth embodiment of the present invention will be described with reference to the drawings.
   In the fifth embodiment, when the switch 84 is turned off from the on state, the sulfur emitting process is executed on the assumption that the NOx occlusion-reduction catalysts of the first and second catalytic converters 36, 38 are saturated with sulfur. In the fifth embodiment, a switch judging routine shown in Fig. 13 is executed instead of the switch judging routine of Fig. 2. Other processes and the hardware configuration are the same as those of the first embodiment.
   The switch judging routine shown in Fig. 13 is repeatedly executed by the ECU 70 at a predetermined interval. That is, the switch judging routine is a periodical interruption process routine. The steps from S406 to S474 in this routine are the same as the steps S402 to S424 of the switch judging routine shown in Fig. 11, respectively. Thus, only the case where the switch 84 is turned off from the on state will be described.
   When this routine is executed after the driver turns the switch 84 off from the on state, the ECU 70 proceeds to step S454 after step S452, and judges whether the flag Fb is off. Since the flag Fb was set on in the previous execution of the routine, the ECU 70 judges that the flag Fb is not off at step S454, and proceeds to step S470. At step S470, the ECU 70 determines whether the temperature increase process has been completed based on the catalyst bed temperature of the filter 38a. When judging that the temperature increase process has not been completed at step S470, the ECU 70 proceeds to step S472. At step S472, the ECU 70 starts the temperature increase process. Then, after step S456, step S458, and step S460, the ECU 70 ends the routine.
   Thereafter, until the catalyst bed'temperature of the filter 38a reaches the target temperature, the ECU 70 judges that the temperature increase process has not been completed at step S470 and continues the temperature increase process at step S472 every time the routine is executed.
   When determining at step S470 that the temperature increase process has been completed based on the fact that the catalyst bed temperature of the filter 38a has reached the target temperature, the ECU 70 proceeds to step S474 and ends the temperature increase process. At subsequent step S476, the ECU 70 substitutes for the sulfur poisoning amount Sₓ a saturated poisoning amount Sₛₐₜ, which is obtained on the assumption that the NOx occlusion-reduction catalysts of the first and second catalytic converters 36, 38 are saturated with sulfur. That is, the saturated poisoning amount Sₛₐₜ corresponds to the maximum amount of sulfur that can be physically occluded by the NOx occlusion-reduction catalyst 36a and the filter 38a.
   At subsequent step S472, the ECU 70 starts the sulfur emitting process. Accordingly, sulfur components poisoning the first and second catalytic converters 36, 38 start being emitted. The calculation of the sulfur emitting amount S_{dec} using the equation 2 and the calculation of the sulfur poisoning amount Sₓ using the equation 3 are executed during the sulfur emitting process as in the above description of steps S155 and step S166 in the sulfur poisoning amount computing routine shown in Fig. 3.
   At subsequent step S480, the ECU 70 computes the sulfur poisoning amount Sₓ, and judges whether the computed sulfur poisoning amount Sₓ is equal to or less than zero. When judging that the sulfur poisoning amount Sₓ is not equal to or less than zero, the ECU 70 ends the routine after step S456, step S458, and step S460.
   Thereafter, until the sulfur poisoning amount Sₓ becomes equal to or less than zero through the sulfur emitting process, the ECU 70 judges that the sulfur poisoning amount Sₓ is not equal to or less than zero at step S480 every time the routine is executed. When the sulfur poisoning amount Sₓ is eventually decreased to a level equal to or less than zero, the ECU 70 judges that the sulfur poisoning amount Sₓ is equal' to or less than zero at step S480, and proceeds to step S482. At step S482, the ECU 70 clears the sulfur poisoning amount Sₓ to zero. At subsequent step S484, the ECU 70 turns the flag Fb off. At subsequent step S486, the ECU 70 ends the sulfur emitting process, and ends the routine after step S456, step S458, and step S460.
   Changes in the sulfur poisoning amount Sₓ when the switch judging routine shown in Fig. 13 is repeated are shown in the above mentioned Fig. 12(A). However, unlike the switch judging routine shown in Fig. 11, in the switch judging routine shown in Fig. 13, it is assumed that the NOx occlusion-reduction catalysts of the first and second catalytic converters 36, 38 are saturated with sulfur, and the sulfur emitting process is executed to emit all the saturating sulfur.
   The switch 84 is part of the determination means and part of the indicating means. The switch judging routine of Fig. 13 executed by the ECU 70 includes a process executed by the changing means that changes the control procedure of the sulfur poisoning elimination control.
   In addition to the advantages (1) to (3) of the first embodiment, the fifth embodiment has the following advantage.
(7) As shown in Fig. 12, when fuel is switched to a low sulfur fuel from a fuel the sulfur concentration of which is higher than the assumed highest sulfur concentration, the sulfur emitting process is executed, in which the NOx occlusion-reduction catalysts of the first and second catalytic converters 36, 38 are saturated with sulfur. The sulfur emitting process causes all the sulfur poisoning the first and second catalytic converters 36, 38 to be emitted. As a result, the deviation between the sulfur poisoning amount Sₓ, which is computed by the ECU 70, and the actual sulfur poisoning amount is eliminated. Therefore, the deviation between the sulfur poisoning amount Sₓ computed by the ECU 70 and the actual sulfur poisoning amount is eliminated. Therefore, the accuracy of control executed by the ECU 70 is improved. Further, even if a high sulfur fuel and a low sulfur fuel are alternately supplied, the sulfur poisoning amount will not be excessive, and white smoke and smell are prevented.
   Hereinafter, a sixth embodiment of the present invention will be described with reference to the drawings.
   In the sixth embodiment, when the switch 84 is turned off from the on state, the sulfur poisoning elimination control and the filter regeneration control are gradually switched from a procedure for a high sulfur fuel to a procedure for a low sulfur fuel. In the sixth embodiment, a switch judging routine shown in Fig. 14 is executed instead of the switch judging routine of Fig. 2. Other processes and the hardware configuration are the same as those of the first embodiment.
   The switch judging routine shown in Fig. 14 is repeatedly executed by the ECU 70 at a predetermined interval. That is, the switch judging routine is a periodical interruption process routine. The steps from S502 to S518 in this routine are the same as the steps S402 to S418 of the switch judging routine shown in Fig. 11, respectively. Thus, only the case where the switch 84 is turned off from the on state will be described. However, the switch judging routine shown in Fig. 14 is different from the switch judging routine shown in Fig. 11 in that a gradual change flag Fc is used instead of the lowest poisoning level flag Fb. The gradual change flag Fc is a flag indicating whether the sulfur poisoning elimination control and the filter regeneration control are being gradually switched from the high sulfur fuel mode to the low sulfur fuel mode.
   When this routine is executed after the driver turns the switch 84 off from the on state, the ECU 70 proceeds to step S504 after step S502, and judges whether the gradual change flag Fc is off. Since the gradual change flag Fc was set on in the previous execution of the routine, the ECU 70 judges that the gradual change flag Fc is not off at step S504, and proceeds to step S520. At step S520, the ECU 70 executes a gradual change process to the sulfur poisoning unit S_{inc} according to an equation 6: S_{inc} ← S_{incold} + (S_{incL} - S_{incH}) × Kc. A previous cycle value S_{incold} of the equation 6 is the sulfur poisoning unit S_{inc} in the previous execution of the routine. A gradual change coefficient Kc corresponds to a speed of interchange of fuel, which is obtained based on the fuel injection amount Q per injection and the number of revolutions NE of the engine 2 using a map. The gradual change coefficient Kc also corresponds to the amount of fuel consumption per'unit time. When the fuel consumption amount per unit time is great, the fuel to be injected from the fuel injection valves 58 is quickly replaced, which causes the gradual change coefficient Kc to be great. When the fuel consumption amount per unit time is small, the fuel to be injected from the fuel injection valves 58 is replaced slowly, which causes the gradual change coefficient Kc to be small.
   At subsequent step S522, the ECU 70 executes a gradual change process to the maximum poisoning amount Sₘₐₓ according to an equation 7: Sₘₐₓ ← S_{maxold} + (S_{maxL} - S_{maxH}) × Kc. A previous cycle value S_{maxold} of the equation 7 is the maximum poisoning amount Sₘₐₓ in the previous execution of the routine.
   At subsequent step S524, the ECU 70 executes a gradual change process to the minimum poisoning amount Sₘᵢₙ according to an equation 8: Sₘᵢₙ ← S_{minold} + (S_{minL} - S_{minH}) × Kc. A previous cycle value S_{minold} of the equation 8 is the minimum poisoning amount Sₘᵢₙ in the previous execution of the routine.
   At subsequent step S526, the ECU 70 judges whether the gradual change process should be continued. Whether the gradual change process should be continued is determined based on whether the sulfur poisoning unit S_{inc}, the maximum poisoning amount Sₘₐₓ, and the minimum poisoning amount Sₘᵢₙ are sufficiently close to the predetermined values S_{incL}, S_{maxL}, and S_{minL}, respectively. If the sulfur poisoning unit S_{inc}, the maximum poisoning amount Sₘₐₓ, and the minimum poisoning amount Sₘᵢₙ are not yet sufficiently close to the predetermined values S_{incL}, S_{maxL}, and S_{minL}, the ECU 70 judges that the gradual change control should be continued, and suspends the routine.
   Thereafter, until the sulfur poisoning unit S_{inc}, the maximum poisoning amount Sₘₐₓ, and the minimum poisoning amount Sₘᵢₙ are made sufficiently close to the predetermined values S_{incL}, S_{maxL}, and S_{minL} through the gradual change control, the ECU 70 judges that the gradual change control should be continued at step S526 every time the routine is executed. When the sulfur poisoning unit S_{inc}, the maximum poisoning amount Sₘₐₓ, and the minimum poisoning amount Sₘᵢₙ are eventually sufficiently close to the predetermined values S_{incL}, S_{maxL}, and S_{minL}, the ECU 70 judges that the gradual change control should not be continued at step S526 and proceeds to step S528. At step S484, the ECU 70 turns the gradual change flag Fc off.
   Since the gradual change flag Fb is off in the subsequent execution of the routine, the ECU 70 judges that the gradual change flag Fb is off at step S504, and proceeds to step S506. At step S506, the ECU 70 substitutes the predetermined value S_{incL} for the sulfur poisoning unit S_{inc}. At subsequent step S508, the ECU 70 substitutes the predetermined value S_{maxL} for the maximum poisoning amount Sₘₐₓ. At subsequent step S510, the ECU 70 substitutes the predetermined value S_{mixL} for the minimum poisoning amount Sₘᵢₙ. Thereafter, the ECU 70 ends the routine.

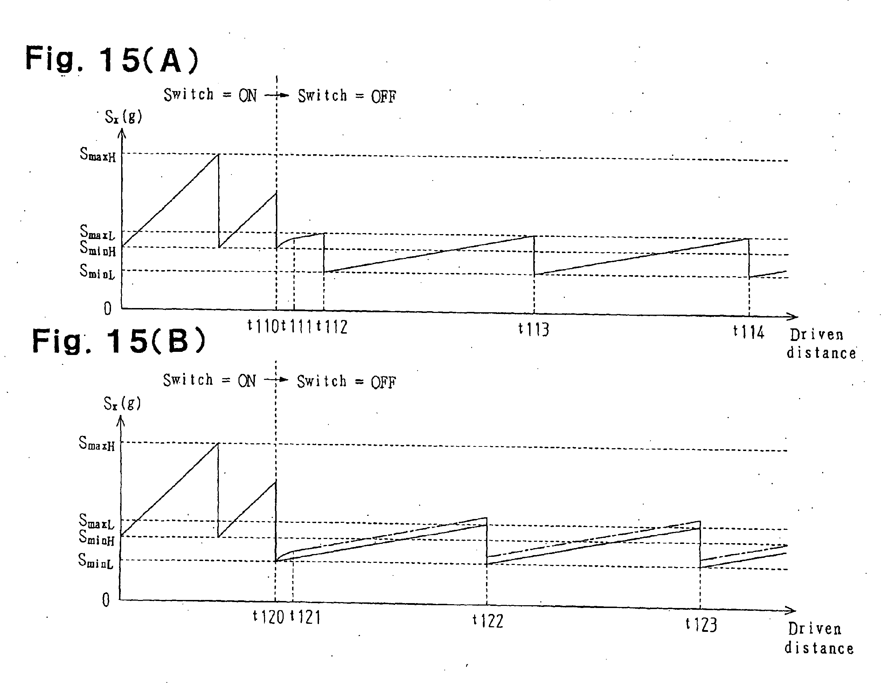

   Fig. 15(A) shows changes in the sulfur poisoning amount Sₓ in a case where the sulfur poisoning elimination control is gradually changed from the high sulfur fuel mode to the low sulfur fuel mode when the switch 84 is turned off from the on state, that is, changes in the sulfur poisoning amount Sₓ when the switch judging routine shown in Fig. 14 is repeatedly executed. Fig. 15(B) shows changes in the sulfur poisoning amount Sₓ in a case where the sulfur poisoning elimination control is not gradually changed from the high sulfur fuel mode to the low sulfur fuel mode when the switch 84 is turned off from the on state. When the switch 84 is turned off from the on state, the sulfur emitting process is executed, accordingly.
   In the example shown in Fig. 12(A), the switch 84 is turned off from the on state at a point in time that corresponds to a driven distance t110. At this point in time, a high sulfur fuel still remains in the fuel pump 62, the common rail 60, and the fuel supply pipes 58a. Therefore, for a while, the sulfur concentration of fuel supplied to the combustion chambers 4 is gradually changed from a high concentration to a low concentration. The sulfur poisoning amount Sₓ is gradually changed accordingly from the point in time that corresponds to the driven distance t110 to a point in time that corresponds to a driven distance 111. Therefore, the actual sulfur poisoning amount and the sulfur poisoning amount Sₓ are not deviated from each other. On the other hand, in the example shown in Fig. 12(B), the sulfur poisoning elimination control is immediately changed to the low sulfur fuel mode when the switch 84 is turned off from the on state at a point in time that corresponds to a driven distance t120. Therefore, the sulfur poisoning amount Sₓ falls below the actual sulfur poisoning amount, which is shown by an alternate long and short dash line in Fig. 12(B). That is, a deviation exists between the actual sulfur poisoning amount and the sulfur poisoning amount Sₓ.
   The switch 84 is part of the determination means and part of the indicating means. The switch judging routine of Fig. 14 executed by the ECU 70 includes a process executed by the changing means that changes the control procedure of the sulfur poisoning elimination control.
   In addition to the advantages (1) to (3) of the first embodiment, the sixth embodiment has the following advantage.
(8) As described using Fig. 15, when the switch 84 is turned off from the on state, the control procedure of the sulfur poisoning elimination control is gradually changed from a mode corresponding to a high sulfur fuel to a mode corresponding to a low sulfur fuel. Therefore, even if the sulfur concentration of fuel is being changed, the sulfur poisoning elimination control is executed in a favorable manner. This prevents the exhaust emission from deteriorating and the fuel efficiency from being reduced.

It should be apparent to those skilled in the art that the present invention may be embodied in many other specific forms without departing from the spirit of scope of the invention. Particularly, it should be understood that the invention may be embodied in the following forms.
(a) In the first to sixth embodiments, the switch 84 is of a manual type. However, the switch 84 does not need to be a manual type. For example, a sulfur concentration sensor may be provided at a location where fuel exists, for example, the fuel tank or the common rail 60, or in an exhaust passage such as the exhaust manifold 32 and the exhaust passage 34. In this case, the switch 84 may be automatically switched between the on state and the off state based on the sulfur concentration of fuel , which are detected by the sulfur concentration sensor, or the sulfur concentration of exhaust. Alternatively, based o the sulfur concentration detected by the sensor, the data of a memory device may be directly rewritten. In this embodiment, the memory device is memory of the ECU 70. According to this configuration, the ECU 70 easily obtains the sulfur concentration level of fuel without calculating the actual sulfur concentration after identifying the condition of fuel supplying and the region where the fuel was supplied. Therefore, the ECU 70 is capable of executing the sulfur poisoning elimination control in a favorable manner based on the detected sulfur concentration level of the fuel.
(b) In the first embodiment and the fourth to sixth embodiments, the sulfur poisoning unit S_{inc}, the maximum poisoning amount Sₘₐₓ, and the minimum poisoning amount Sₘᵢₙ are changed when the switch 84 is off and when the switch 84 is off, so that the interval and the duration of the sulfur emitting process are changed. In contrast to this, the control procedure of the sulfur poisoning elimination control may be switched by directly changing the interval and the duration of the sulfur emitting process. In the third embodiment, the particulate matter accumulation amount PMₛₘ is corrected when the switch 84 is on, so that the interval of the temperature increase process in the sulfur regeneration control is changed. In contrast to this, the interval of the temperature increase process in the filter regeneration control may be changed by correcting a parameter that determines the interval other than the particulate matter accumulation amount PMₛₘ, for example, the reference accumulation amount PM_{jd} or the particulate matter accumulation amount PMₛₘ when the filter regeneration is completed. Alternatively, the control procedure of the filter regeneration control may be switched by directly changing the interval and the duration of the temperature increase process in the filter regeneration control.
(c) In the third embodiment, the control procedure of the filter regeneration control is switched depending on whether the switch 84 is on or off. However, as in the first embodiment, the control procedure of the sulfur poisoning elimination control may be switched at the same time as the control procedure of the filter regeneration control is switched.
(d) When the sulfur emitting process is executed with the switch 84 on, an air-fuel ratio increasing process, or a process for making air-fuel ratio lean, may be executed for moderating the degree of decrease of the air-fuel ratio compared to the case where the sulfur emitting process is executed with the switch 84 off. The air-fuel ratio increasing process corresponds to a process executed by air-fuel ratio increasing means. For example, if the target air-fuel ratio when the switch 84 is off is 14.0, the target air-fuel ratio when the switch 84 is on is set to 14.3. In this case, the actual air-fuel ratio is subjected to feedback control such that the actual air-fuel ratio does not fall below the target air-fuel ratio. When the sulfur concentration level of fuel is high, the catalysts are rapidly poisoned with sulfur. Therefore, when the sulfur concentration of fuel is abruptly increased, the sulfur poisoning is likely to have developed to a considerable level when the sulfur emitting process is actually executed. In such a case, emission of sulfur is likely to cause exhaust gas to smell. The cause of the smell at the sulfur emission is hydrogen sulfide. This type of smell is enhanced when the air-fuel ratio is low. Therefore, moderating the degree of decrease of the air-fuel ratio, that is, adjusting the air-fuel ratio to be relatively lean, suppresses the smell of exhaust gas.
(e) In the second embodiment, the sulfur emitting process, which is being executed in synchronization with the filter regeneration control, is stopped when the switch 84 is turned off from the on state. However, the sulfur emitting process does not need to be stopped. Instead, the number of execution of the sulfur emitting process executed in synchronization with the filter regeneration control may be gradually reduced. In the third embodiment, addition of the correction value PM_{add} to the particulate matter accumulation amount PMₛₘ is stopped when the switch 84 is turned off from the on state. However, the addition of the correction value PM_{add} does not need to be stopped. Instead, the magnitude of the correction value PM_{add} in relation to the particulate matter accumulation amount PMₛₘ may be gradually reduced. These gradual change processes permit the filter regeneration control to be executed in a favorable manner even if the sulfur concentration of fuel is being changed.
(f) In the switching judging routine according to the fourth embodiment shown in Fig. 11, the predetermined value S_{z}, which represents the lowest level of the sulfur poisoning amount, is set to zero. However, the predetermined value S_{z} may be set to a negative value. In a case where a negative number having a sufficiently great absolute value is used as the predetermined value S_{z}, it may be configured that the ECU 70 proceeds to step S432 without executing step S430 when judging that the sulfur poisoning amount Sₓ is equal to or less than the predetermined value S_{z}.
(g) The present invention is not limited to diesel engines, but may be applied to lean combustion gasoline engines.

The present examples and embodiments are to be considered as illustrative and not restrictive and the invention is not to be limited to the details given herein, but may be modified within the scope of the appended claims.

## Claims

1. An apparatus for controlling an exhaust purifying catalyst, the catalyst being located in an exhaust system of an internal combustion engine (2), wherein the apparatus executes elimination control for eliminating sulfur poisoning of the exhaust purifying catalyst in accordance with the amount of sulfur poisoning of the catalyst, the apparatus further comprising indicating means that indicates the level of sulfur concentration of fuel used in the internal combustion engine,
**characterized in that**
the indicating means includes a manually operated switch (84) that is switched between a first state and a second state depending on the concentration of sulfur of fuel, wherein the first state is a state where the sulfur concentration of the fuel is high and the second state is a state where the sulfur concentration of the fuel is low, and **in that**
the apparatus further includes changing means that changes a control procedure of the elimination control based on the sulfur concentration level indicated by the indicating means, wherein, when the indicating means is in the first state, the changing means changes the control procedure on the assumption that the fuel has the highest sulfur concentration among the currently known types of fuel.

2. The control apparatus according to claim 1, **characterized in that** the elimination control includes a sulfur emitting process for emitting sulfur poisoning the exhaust purifying catalyst from the exhaust purifying catalyst, wherein the changing means changes the control procedure of the elimination control by changing an interval of the sulfur emitting process or by changing a parameter that determines the interval.

3. The control apparatus according to claim 1, **characterized in that** the elimination control includes a sulfur emitting process for emitting sulfur poisoning the exhaust purifying catalyst from the exhaust purifying catalyst, wherein the changing means changes the control procedure of the elimination control by changing a duration of the sulfur emitting process.

4. The control apparatus according to claim 1, **characterized in that** the elimination control includes a sulfur emitting process for emitting sulfur poisoning the exhaust purifying catalyst from the exhaust purifying catalyst, wherein the exhaust purifying catalyst has a function to trap particulate matter in exhaust gas, and wherein, when judging that the sulfur concentration level is high based on the indicating means, the changing means executes the sulfur emitting process in synchronization with a temperature increase process in a regeneration control for regenerating the exhaust purifying catalyst.

5. The control apparatus according to any one of claims 1 to 3, **characterized in that** the exhaust purifying catalyst has a function to trap particulate matter in exhaust gas, wherein, based on the sulfur concentration level indicated by the indicating means, the changing means changes not only the control procedure of the elimination control, but also a control procedure of a regeneration control for regenerating the exhaust purifying catalyst.

6. The control apparatus according to claim 1, **characterized in that** the exhaust purifying catalyst has a function to trap particulate matter in exhaust gas, the control apparatus further comprising changing means, wherein, based on the sulfur concentration level indicated by the indicating means, the changing means changes a control procedure of a regeneration control for regenerating the exhaust purifying catalyst.

7. The control apparatus according to claim 5 or 6, **characterized in that** the regeneration control includes a temperature increase process for increasing a bed temperature of the exhaust purifying catalyst, wherein the changing means changes the control procedure of the regeneration control by changing an interval of the temperature increase process or by changing a parameter that determines the interval.

8. The control apparatus according to claim 5 or 6, **characterized in that** the regeneration control includes a temperature increase process for increasing a bed temperature of the exhaust purifying catalyst, wherein the changing means changes the control procedure of the regeneration control by changing a duration of the temperature increase process.

9. The control apparatus according to claim 1, **characterized in that** the elimination control includes a sulfur emitting process for emitting sulfur poisoning the exhaust purifying catalyst from the exhaust purifying catalyst, the control apparatus further comprising air-fuel ratio increasing means, wherein, when the sulfur concentration level is judged to be high based on the indicating means and the control procedure of the elimination control is changed, the air-fuel ratio increasing means moderates a degree of decrease in the air-fuel ratio, which decrease is caused by the sulfur emitting process, compared to a degree of decrease in the air-fuel ratio prior to the change of the control procedure.

10. The control apparatus according to any one of claims 1 to 9, wherein, when the indicating means is switched from the first state to the second state, the changing means executes the sulfur emitting process in the elimination control, thereby decreasing the amount of sulfur poisoning of the exhaust purifying catalyst to a lowest level.

11. The control apparatus according to any one of claims 1 to 9, wherein, when the indicating means is switched from the first state to the second state, the changing means executes the sulfur emitting process in the elimination control on the assumption that the exhaust purifying catalysts is saturated with sulfur.

12. The control apparatus according to any one of claims 1 to 9, wherein, when the indicating means is switched from the first state to the second state, the changing means gradually changes the control procedure.

13. The control apparatus according to any one of claims 1 to 12, **characterized in that** the internal combustion engine is a diesel engine.

14. The control apparatus according to any one of claims 1 to 13, **characterized in that** the exhaust purifying catalyst includes a filter (38a) and a NOx occlusion-reduction catalyst supported by the filter, wherein the filter is located in the exhaust system of the internal combustion engine and traps particulate matter in exhaust gas.

## Patentansprüche

1. Vorrichtung zum Steuern einer Abgasreinigungsvorrichtung, wobei der Katalysator in einem Abgassystem eines Verbrennungsmotors (2) angeordnet ist, wobei die Vorrichtung eine Beseitigungssteuerung zum Beseitigen einer Schwefelvergiftung des Abgasreinigungskatalysators gemäß dem Betrag der Schwefelvergiftung des Katalysators ausführt, wobei die Vorrichtung ferner eine Anzeigeeinrichtung aufweist, die den Wert der Schwefelkonzentration des Kraftstoffs anzeigt, der in dem Verbrennungsmotor verwendet wird,
**dadurch gekennzeichnet, dass**
die Anzeigeeinrichtung einen manuell betätigten Schalter (84) beinhaltet, der zwischen einem ersten Zustand und einem zweiten Zustand abhängig von der Schwefelkonzentration des Kraftstoffs umgeschaltet wird, wobei es sich bei dem ersten Zustand um einen Zustand handelt, in dem die Schwefelkonzentration des Kraftstoffs hoch ist, und wobei es sich bei dem zweiten Zustand um einen Zustand handelt, in dem die Schwefelkonzentration des Kraftstoffs niedrig ist, und dadurch, dass
die Vorrichtung ferner eine Veränderungseinrichtung beinhaltet, die einen Steuervorgang der Beseitigungssteuerung basierend auf dem Schwefelkonzentrationswert verändert, der durch die Anzeigeeinrichtung angezeigt wird, wobei, wenn die Anzeigeeinrichtung sich in dem ersten Zustand befindet, die Veränderungseinrichtung den Steuervorgang unter der Annahme verändert, dass der Kraftstoff von den derzeit bekannten Kraftstoffsorten die höchste Schwefelkonzentration aufweist.

2. Steuervorrichtung nach Anspruch 1, **dadurch gekennzeichnet, dass** die Beseitigungssteuerung einen Schwefelemittierungsvorgang zum Emittieren einer Schwefelvergiftung des Abgasreinigungskatalysators aus dem Abgasreinigungskatalysator beinhaltet, wobei die Veränderungseinrichtung den Steuerungsvorgang der Beseitigungssteuerung durch Verändern eines Intervalls des Schwefelemittierungsvorgangs oder durch Verändern eines Parameters, der das Intervall bestimmt, verändert.

3. Steuervorrichtung nach Anspruch 1, **dadurch gekennzeichnet, dass** die Beseitigungssteuerung einen Schwefelemittierungsvorgang zum Emittieren einer Schwefelvergiftung in dem Abgasreinigungskatalysator aus dem Abgasreinigungskatalysator beinhaltet, wobei die Veränderungseinrichtung das Steuerungsverfahren der Beseitigungssteuerung durch Verändern einer Dauer des Schwefelemittierungsvorgangs verändert.

4. Steuervorrichtung nach Anspruch 1, **dadurch gekennzeichnet, dass** die Beseitigungssteuerung einen Schwefelemittierungsvorgang zum Emittieren einer Schwefelvergiftung in dem Abgasreinigungskatalysator aus dem Abgasreinigungskatalysator beinhaltet, wobei der Abgasreinigungskatalysator eine Funktion aufweist, um Partikel in einem Abgas einzuschließen, und wobei, wenn basierend auf der Anzeigeeinrichtung beurteilt wird, dass der Schwefelkonzentrationswert hoch ist, die Veränderungseinrichtung den Schwefelemittierungsvorgang synchron mit einem Temperaturerhöhungsvorgang in einer Regenerationssteuerung zum Regenerieren des Abgasreinigungskatalysator ausführt.

5. Steuervorrichtung nach einem der Ansprüche 1 bis 3, **dadurch gekennzeichnet, dass** der Abgasreinigungskatalysator eine Funktion aufweist, um Partikel in einem Abgas einzuschließen, wobei, basierend auf dem Schwefelkonzentrationswert, der durch die Anzeigeeinrichtung angezeigt wird, die Veränderungseinrichtung nicht nur das Steuerungsverfahren der Beseitigungssteuerung verändert, sondern auch ein Steuerverfahren einer Regenerationssteuerung zum Regenerieren des Abgasreinigungskatalysators.

6. Steuervorrichtung nach Anspruch 1, **dadurch gekennzeichnet, dass** der Abgasreinigungskatalysator eine Funktion aufweist, um Partikel in einem Abgas einzuschließen, wobei die Steuervorrichtung ferner eine Veränderungseinrichtung aufweist, wobei, basierend auf dem Schwefelkonzentrationswert, der durch die Anzeigeeinrichtung angezeigt wird, die Veränderungseinrichtung einen Steuervorgang einer Regenerationssteuerung zum Regenerieren des Abgasreinigungskatalysators verändert.

7. Steuervorrichtung nach Anspruch 5 oder 6, **dadurch gekennzeichnet, dass** die Regenerationssteuerung einen Temperaturerhöhungsvorgang zum Erhöhen einer Betttemperatur des Abgasreinigungskatalysators beinhaltet, wobei die Veränderungseinrichtung das Steuerverfahren der Regenerationssteuerung durch Verändern eines Intervalls des Temperaturerhöhungsvorgangs oder durch Verändern eines Parameters, der das Intervall bestimmt, verändert.

8. Steuervorrichtung nach Anspruch 5 oder 6, **dadurch gekennzeichnet, dass** die Regenerationssteuerung einen Temperaturerhöhungsvorgang zum Erhöhen einer Betttemperatur des Abgasreinigungskatalysators beinhaltet, wobei die Veränderungseinrichtung das Steuerverfahren der Regenerationssteuerung durch Verändern einer Dauer des Temperaturerhöhungsvorgangs verändert.

9. Steuervorrichtung nach Anspruch 1, **dadurch gekennzeichnet, dass** die Beseitigungssteuerung einen Schwefelemittierungsvorgang zum Emittieren einer Schwefelvergiftung in dem Abgasreinigungskatalysator aus dem Abgasreinigungskatalysator beinhaltet, wobei die Steuervorrichtung ferner eine Kraftstoff-Luft-Verhältnis-Erhöhungseinrichtung aufweist, wobei, wenn, basierend auf der Anzeigevorrichtung, beurteilt wird, dass der Schwefelkonzentrationswert hoch ist, und das Steuerverfahren verändert wird, die Kraftstoff-Luftverhältnis-Erhöhungseinrichtung einen Grad einer Verringerung des Kraftstoff-Luftverhältnisses, wobei diese Verringerung durch den Schwefelemittierungsvorgang verursacht wird, gegenüber einem Grad einer Verringerung des Kraftstoff-Luftverhältnisses vor der Veränderung des Steuerverfahrens moderiert.

10. Steuervorrichtung nach einem der Ansprüche 1 bis 9, wobei, wenn die Anzeigeeinrichtung von dem ersten Zustand in den zweiten Zustand geschaltet wird, die Veränderungseinrichtung den Schwefelemittierungsvorgang in der Beseitigungssteuerung ausführt, wodurch der Betrag der Schwefelvergiftung des Abgasreinigungskatalysators auf einen niedrigsten Wert verringert wird.

11. Steuervorrichtung nach einem der Ansprüche 1 bis 9, wobei, wenn die Anzeigeeinrichtung von dem ersten Zustand in den zweiten Zustand geschaltet wird, die Veränderungseinrichtung den Schwefelemittierungsvorgang in der Beseitigungssteuerung unter der Annahme ausführt, dass der Abgasreinigungskatalysator mit Schwefel gesättigt ist.

12. Steuervorrichtung nach einem der Ansprüche 1 bis 9, wobei, wenn die Anzeigeeinrichtung von dem ersten Zustand in den zweiten Zustand geschaltet wird, die Veränderungseinrichtung das Steuerverfahren allmählich verändert.

13. Steuervorrichtung nach einem der Ansprüche 1 bis 2, **dadurch gekennzeichnet, dass** es sich bei dem Verbrennungsmotor um einen Dieselmotor handelt.

14. Steuervorrichtung nach einem der Ansprüche 1 bis 13, **dadurch gekennzeichnet, dass** der Abgasreinigungskatalysator ein Filter (38a) und einen durch das Filter unterstützten NOx-Verstopfungsreduktionskatalysator beinhaltet, wobei das Filter in dem Abgassystem des Verbrennungsmotors angeordnet ist und Partikel in einem Abgas einschließt.

## Revendications

1. Appareil de commande d'un catalyseur de purification de gaz d'échappement, le catalyseur étant situé dans un système d'échappement d'un moteur à combustion interne (2), dans lequel l'appareil exécute une commande d'élimination pour éliminer l'empoisonnement par le soufre du catalyseur de purification de gaz d'échappement en conformité avec la quantité de l'empoisonnement par le soufre du catalyseur, l'appareil comprenant en plus un moyen d'indication qui indique le niveau de concentration en soufre du carburant utilisé dans le moteur à combustion interne,
**caractérisé en ce que**
le moyen d'indication inclut un commutateur (84) actionné manuellement que l'on fait passer entre un premier état et un deuxième état selon la concentration en soufre du carburant, où le premier état est un état où la concentration en soufre du carburant est élevée et le deuxième état est un état où la concentration en soufre du carburant est faible, et **en ce que**
l'appareil comporte en outre un moyen de changement qui change une procédure de commande de la commande d'élimination sur la base du niveau de la concentration en soufre indiqué par le moyen d'indication, où, lorsque le moyen d'indication se trouve dans le premier état, le moyen de changement change la procédure de commande en supposant que le carburant a la concentration en soufre la plus élevée parmi les types de carburant que l'on connaît actuellement.

2. Appareil de commande selon la revendication 1, **caractérisé en ce que** la commande d'élimination comporte un processus d'émission de soufre pour émettre le soufre qui empoisonne le catalyseur de purification de gaz d'échappement à partir du catalyseur de purification de gaz d'échappement, où le moyen de changement change la procédure de commande de la commande d'élimination en modifiant un intervalle du processus d'émission du soufre ou en modifiant un paramètre qui détermine l'intervalle.

3. Appareil de commande selon la revendication 1, **caractérisé en ce que** la commande d'élimination comporte un processus d'émission de soufre pour émettre le soufre qui empoisonne le catalyseur de purification de gaz d'échappement à partir du catalyseur de purification de gaz d'échappement, où le moyen de changement change la procédure de commande de la commande d'élimination en modifiant une durée du processus d'émission de soufre.

4. Appareil de commande selon la revendication 1, **caractérisé en ce que** la commande d'élimination comporte un processus d'émission de soufre pour émettre le soufre qui empoisonne le catalyseur de purification de gaz d'échappement à partir du catalyseur de purification de gaz d'échappement, où le catalyseur de purification de gaz d'échappement a une fonction de rétention des matières particulaires dans le gaz d'échappement, et où, lorsqu'on estime que le niveau de concentration en soufre est élevé sur la base du moyen d'indication, le moyen de changement exécute le processus d'émission de soufre de manière synchronisée avec un processus d'augmentation de température dans une commande de régénération pour régénérer le catalyseur de purification de gaz d'échappement.

5. Appareil de commande selon l'une quelconque des revendications 1 à 3, **caractérisé en ce que** le catalyseur de purification de gaz d'échappement a une fonction de rétention des matières particulaire dans le gaz d'échappement, où, sur la base du niveau de concentration en soufre indiqué par le moyen d'indication, le moyen de changement change, non seulement la procédure de commande de la commande d'élimination, mais également une procédure de commande d'une commande de régénération pour régénérer le catalyseur de purification de gaz d'échappement.

6. Appareil de commande selon la revendication 1, **caractérisé en ce que** le catalyseur de purification de gaz d'échappement a une fonction de rétention des matières particulaires dans le gaz d'échappement, l'appareil de commande comprenant en plus un moyen de changement, où, sur la base du niveau de concentration en soufre indiqué par le moyen d'indication, le moyen de changement change une procédure de commande d'une commande de régénération pour régénérer le catalyseur de purification de gaz d'échappement.

7. Appareil de commande selon la revendication 5 ou 6, **caractérisé en ce que** la commande de régénération comporte un processus d'augmentation de température pour augmenter une température de lit du catalyseur de purification de gaz d'échappement, où le moyen de changement change la procédure de commande de la commande de régénération en modifiant un intervalle du processus d'augmentation de température ou en modifiant un paramètre qui détermine l'intervalle.

8. Appareil de commande selon la revendication 5 ou 6, **caractérisé en ce que** la commande de régénération comporte un processus d'augmentation de température pour augmenter une température de lit du catalyseur de purification de gaz d'échappement, où le moyen de changement change la procédure de commande de la commande de régénération en modifiant une durée du processus d'augmentation de température.

9. Appareil de commande selon la revendication 1, **caractérisé en ce que** la commande d'élimination comporte un processus d'émission de soufre pour émettre le soufre qui empoisonne le catalyseur de purification de gaz d'échappement à partir du catalyseur de purification de gaz d'échappement, l'appareil de commande comprenant en plus un moyen d'augmentation du rapport air-carburant, où, lorsqu'on estime que le niveau de concentration en soufre est élevé sur la base du moyen d'indication et que la procédure de commande de la commande d'élimination est changée, le moyen d'augmentation du rapport air-carburant atténue un degré de diminution du rapport air-carburant, laquelle diminution est provoquée par le processus d'émission de soufre, en comparaison à un degré de diminution du rapport air-carburant avant le changement de la procédure de commande.

10. Appareil de commande selon l'une quelconque des revendications 1 à 9, dans lequel, lorsqu'on fait passer le moyen d'indication du premier état au deuxième état, le moyen de changement exécute le processus d'émission de soufre dans la commande d'élimination, diminuant ainsi la quantité de l'empoisonnement par le soufre du catalyseur de purification de gaz d'échappement jusqu'au niveau le plus bas niveau.

11. Appareil de commande selon l'une quelconque des revendications 1 à 9, dans lequel, lorsqu'on fait passer le moyen d'indication du premier état au deuxième état, le moyen de changement exécute le processus d'émission de soufre dans la commande d'élimination en considérant que le catalyseur de purification de gaz d'échappement est saturé par le soufre.

12. Appareil de commande selon l'une quelconque des revendications 1 à 9, dans lequel, lorsqu'on fait passer le moyen d'indication du premier état au deuxième état, le moyen de changement change graduellement la procédure de commande.

13. Appareil de commande selon l'une quelconque des revendications 1 à 12, **caractérisé en ce que** le moteur à combustion interne est un moteur diesel.

14. Appareil de commande selon l'une quelconque des revendications 1 à 13, **caractérisé en ce que** le catalyseur de purification de gaz d'échappement comprend un filtre (38a) et un catalyseur de réduction d'occlusion de NOx supporté par le filtre, où le filtre est situé dans le système d'échappement du moteur à combustion interne et retient les matières particulaires dans le gaz d'échappement.
